(19) Europäisches Patentamt
European Patent Office
Office européen des brevets

(11) **EP 4 380 797 B1**

(12) **EUROPÄISCHE PATENTSCHRIFT**

(45) Veröffentlichungstag und Bekanntmachung des Hinweises auf die Patenterteilung:
**27.11.2024   Patentblatt 2024/48**

(21) Anmeldenummer: **22761969.9**

(22) Anmeldetag: **02.08.2022**

(51) Internationale Patentklassifikation (IPC):
**B32B 25/18** (2006.01)   **B32B 5/02** (2006.01)
**B32B 7/12** (2006.01)   **B32B 15/06** (2006.01)
**B32B 25/04** (2006.01)   **F16L 58/10** (2006.01)

(52) Gemeinsame Patentklassifikation (CPC):
**B32B 1/08; B32B 3/06; B32B 3/08; B32B 3/266; B32B 5/022; B32B 5/024; B32B 5/028; B32B 7/12; B32B 15/06; B32B 15/08; B32B 15/085; B32B 25/042; B32B 25/08; B32B 25/10; B32B 25/18;**   (Forts.)

(86) Internationale Anmeldenummer:
**PCT/EP2022/071737**

(87) Internationale Veröffentlichungsnummer:
**WO 2023/012178 (09.02.2023 Gazette 2023/06)**

(54) **KORROSIONSSCHUTZBAND UMFASSEND MINDESTENS VIER LAGEN**

ANTI-CORROSION TAPE COMPRISING AT LEAST FOUR PLIES

BANDE ANTI-CORROSION COMPRENANT AU MOINS QUATRE PLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2021   DE 102021120191**

(43) Veröffentlichungstag der Anmeldung:
**12.06.2024   Patentblatt 2024/24**

(73) Patentinhaber: **DENSO-Holding GmbH & Co.
51371 Leverkusen (DE)**

(72) Erfinder: **KAISER, Thomas Markus
52459 Inden (DE)**

(74) Vertreter: **Geskes, Christoph
Geskes Patent- und Rechtsanwälte
Gustav-Heinemann-Ufer 74b
50968 Köln (DE)**

(56) Entgegenhaltungen:
**EP-A1- 3 412 720        WO-A1-2020/229600
CN-A- 101 935 500      CN-U- 207 349 693
US-A1- 2018 305 556    US-A1- 2019 249 039**

(52) Gemeinsame Patentklassifikation (CPC): (Forts.)
**B32B 27/08; B32B 27/18; B32B 27/304;**
**B32B 27/32; F16L 58/1063;** B32B 2250/04;
B32B 2250/05; B32B 2250/40; B32B 2262/0238;
B32B 2262/0253; B32B 2262/103; B32B 2274/00;
B32B 2307/202; B32B 2307/752; B32B 2597/00

**Beschreibung**

Die Erfindung betrifft ein Korrosionsschutzband umfassend mindestens vier Lagen, ein Verfahren zur Aufbringung eines Korrosionsschutzbandes umfassend mindestens vier Lagen, ein Verfahren zur Herstellung eines Korrosionsschutzbandes umfassend mindestens vier Lagen und die Verwendung desselben.

Korrosionsschutzzusammensetzungen und Korrosionsschutzsysteme beispielsweise für Rohr-anlagen wie Pipelines, aber auch für sonstige technische Anlagen, sind vielfältig aus dem Stand der Technik bekannt. So offenbart die EP 0 421 607 A1 ein Bandsystem zum Schutz von rohrförmigen Gegenständen, das eine Innenumwicklung, die die Oberfläche des zu schützenden Gegenstandes bedeckt, und eine über die Innenwicklung angeordnete Au-ßenumwicklung umfasst, wobei die Innenumwicklung eine stoßfeste Schicht mit einer Klebeschicht auf ihrer inneren Oberfläche und eine Schicht auf ihrer äußeren Oberfläche umfasst, und wobei die Außenumwicklung eine Trägerschicht mit einer Schicht auf mindestens einer ihrer Oberflächen umfasst, wobei die Innenumwicklung und die Außenumwicklung warmschmelzbares Material einschließen, wobei das Bandsystem auf dem rohrförmigen Gegenstand so aufgebracht wird, dass bei Erwärmen und Abkühlen die Außenumwicklung mit der Innenumwicklung warmverschmolzen und dadurch eine vollständig geschlossene schützende Beschichtung gebildet wird. Durch das dort offenbarte Bandsystem soll die Aufgabe gelöst werden, eine Verbesserung gegenüber zerstörerischen äußeren Kräften herbeizuführen, indem ein kontinuierliches, nahtloses, schützendes Bandsystem zur Verfügung gestellt wird. Eine der Klebstoffschichten kann beispielsweise aus Butylkautschuk hergestellt sein. Als warmschmelzbares Material werden beispielsweise Ethylenvinylacetat, Ethylenmethylacrylat und Polyethylen niedriger Dichte eingesetzt. Problematisch an dem in EP 0 421 607 A1 offenbarten Bandsystem ist gerade bei höheren Temperaturen umhüllter Rohrsysteme und technischer Anlagen gleich welcher Art der Kontakt zwischen z. B. der Außenseite eines Pipeline-Rohres mit der Klebstoffschicht, beispielsweise aus Butylkautschuk, die sich von der Außenseite des Pipeline-Rohres lösen kann und/oder dessen mechanische Eigenschaften verschlechtern. Dies hängt insbesondere mit einer Depolymerisation der eingesetzten Materialien zusammen, sei es der warmschmelzbaren Materialien, sei es der Trägerschicht. Eine Verbesserung der Haftung kann zwar grundsätzlich durch Verwendung lösemittelhaltiger Primer bzw. Haftvermittler erzeugt werden, jedoch ist dies oftmals ebenfalls nicht ausreichend, vor allen Dingen haben diese auch keinerlei Einfluss auf die mechanischen Eigenschaften der Umhüllung an sich. Insbesondere ist dieses System auch nur mit erhöhtem Arbeitsaufwand und Kostenaufwand einsetzbar, da eine Innenumwicklung und eine Außenumwicklung vorgesehen sein müssen, mithin mindestens zweimal eine Umwicklung vorgenommen werden muss.

Des Weiteren ist aus dem Stand der Technik bei Korrosionsschutzsystemen das Problem bekannt, dass sich eine Undichtigkeit bilden kann und der Eintritt von Wasser ermöglicht wird. Das Wasser kann insbesondere bei überlappend mit Bandsystemen umwickelten Rohren wie Pipelines und ähnlichen rohrförmigen Gegenständen eine besondere Art der Korrosion hervorrufen, die als Spiralkorrosion bekannt ist. Um eine solche Korrosion der Rohre zu vermeiden, wird daher ergänzend ein kathodischer Schutz eingesetzt. Dieser Schutz ist sehr effektiv bei mechanischen Beschädigungen des Korrosionsschutzbandes. Mechanische Beschädigungen können durch Eindringen von spitzen Gegenständen wie Gesteinen oder ähnlichem hervorgerufen werden und können den Verlust der Haftung des Bandes auf der Unterlage, z. B. einer Pipeline, zur Folge haben. Aber auch durch eine Alterung des Materials des Korrosionsschutzbandes können solche Undichtigkeiten und Korrosionen entstehen. Ein kathodischer Schutz beaufschlägt das Rohr mit einem elektrischen Strom, so dass genügend Elektronen bereitgestellt werden, um einer Korrosion vorzubeugen. Der pH-Wert in der Umgebung der Schädigungsstelle steigt ins Alkalische und schützt damit den defekten Bereich. Dieser kathodische Schutz kann jedoch keine Korrosion entlang der Spirale verhindern, da im Überlappungsbereich keine leitenden Elemente zwischen Band und Rohr den Strom transportieren können. Es ist daher wichtig, eine ausreichende mechanische Festigkeit einem Bandsystem zum Korrosionsschutz mitzugeben, was in aller Regel durch eine zusätzliche Umwicklung mit einem Schutzband erfolgt, das Verletzungen des Bandsystems verhindern und damit Korrosionen vorbeugen soll. Hierdurch steigt wiederum der Kostenaufwand aufgrund des zusätzlichen Arbeitsschrittes der Umwicklung mit einem Schutzband.

Ein grundsätzlicher Nachteil der bekannten Bandsysteme ist damit, dass mindestens zweimal eine Umwicklung mit einem Band vorgenommen werden muss, um einen ausreichenden Schutz gegen mechanische Beschädigung zur Verfügung zu stellen und damit eine hinreichende Korrosionsschutzwirkung zu erzielen.

EP 3 412 720 A1 offenbart ein zweischichtiges oder mehrschichtiges Korrosionsschutzband umfassend eine Korrosionsschutzzusammensetzung, diese umfassend mindestens einen ersten Butylkautschuk mit einer scheinbaren Viskosität nach Brookfield bei 66°C gemäß DIN EN ISO 2555 in einem Bereich von etwa 400.000 mPa · s bis etwa 2.000.000 mPa · s und einem mittleren Molekulargewicht in einem Bereich von etwa 20.000 g/mol bis etwa 60.000 g/mol und mindestens einen zweiten Butylkautschuk mit einem mittleren Molekulargewicht in einem Bereich von etwa 150.000 g/mol bis etwa 2.000.000 g/mol und einer Mooney Viskosität ML (1+8) bei 125° C in einem Bereich von etwa 25 MU bis etwa 65 MU, gemessen gemäß ISO 289.

US 2019/249039 A1 offenbart eine Haftvermittlungszusammensetzung für ein Korrosionsschutzprodukt, die Zusammensetzung umfassend - etwa 20 Gew.-% bis etwa 70 Gew.-% mindestens eines Polyolefins ausgewählt aus einer Gruppe umfassend Polyethylene und/oder Polypropylene; - etwa 20 Gew.-% bis etwa 65 Gew.-% mindestens eines Butylkautschuks; und - etwa 6 Gew.-% bis etwa 35 Gew.-% mindestens eines Elastomeren ausgewählt aus einer Gruppe umfassend Ethylen-Propylen-Kautschuk und/oder Ethylen- Propylen-Dien-Kautschuk; jeweils bezogen auf die Gesamtmenge der Haftvermittlungszusammensetzung.

US 2018/305556 A1 offenbart eine Korrosionsschutzzusammensetzung umfassend mindes-tens ein erstes Polyisobutylen mit einem Staudinger-Index $J_0$ in einem Bereich von etwa 15 $cm^3$/g bis etwa 98 $cm^3$/g und einer mittleren relativen Molmasse (Formel A) im einem Bereich von etwa 32.000 g/mol bis etwa 280.000 g/mol und mindestens ein zweites Polyisobutylen mit einem Staudinger-Index Jo in einem Bereich von etwa 105 $cm^3$/g bis etwa 238 $cm^3$/g und einer mittleren relativen Molmasse (Formel A) in einem Bereich von etwa 350.000 g/mol bis etwa 900.000 g/mol.

WO 2020/229600 A1 offenbart ein Korrosionsschutzband für ein Metallrohr (oder ein Metallrohrfitting). Das Band hat ein Innenband aus Glasfasern, das ein viskoelastisches thermoplastisches Korrosionsschutzmaterial umfasst. Das Band hat ein äußeres Band aus Glasfasern, das mit einem Klebstoff imprägniert ist. Das innere Band kann um das Metallrohr gewickelt werden, wobei das viskoelastische thermoplastische Korrosionsschutzmaterial, das von dem inneren Band getragen wird, an einer Außenfläche des Metallrohrs anliegt und diese bedeckt. Das äußere Band wird um das innere Band gewickelt, und der in dem äußeren Band imprägnierte Klebstoff dringt in das innere Band ein und verklebt dadurch das äußere Band mit dem inneren Band.

CN 207 349 693 U offenbart ein Korrosionsschutzband für marine biobeständige Stahlrohre, wobei die Bänder Verbundstoffe sind, die mindestens eine kalt fluidisierte Polymerschicht, eine aus Polyesterfasern geflochtene Schicht, eine wasserblockierende Gummischicht und eine Polyethylenfilmschicht in engem Kontakt miteinander umfassen.

CN 101 935 500 A offenbart einen antikorrosiven viskoelastischen Körpergummigürtel, der eine Schutzfilmschicht, einen ersten viskoelastischen Körpergummigürtel, eine verstärkte Netzwerkschicht, eine zweite viskoelastische Körpergummischicht und eine Trennfilmschicht umfasst, die nacheinander angeordnet sind.

Es ist Aufgabe der vorliegenden Erfindung, ein Korrosionsschutzband zur Verfügung zu stellen, dass vor allem einen zweiten Arbeitsschritt betreffend die Versehung von insbesondere Rohren, Pipelines, rohrförmigen Gegenständen, Rohrleitungen und Rohrleitungsbauteilen und ähnlichem mit einem Schutzband überflüssig macht. Zudem ist es Aufgabe der vorliegenden Erfindung, ein Korrosionsschutzband funktionalisierbar zu gestalten, so dass es ergänzende Eigenschaften aufweisen kann.

Diese Aufgabe wird gelöst durch ein Korrosionsschutzband umfassend mindestens vier Lagen, wobei mindestens zwei Lagen des Korrosionsschutzbandes als Trägerlagen einen mindestens einschichtigen Träger umfassen, wobei mindestens eine Schicht des Trägers als Tragschicht ausgebildet ist, wobei mindestens eine weitere Lage des Korrosionsschutzbandes als Verbindungslage ausgebildet ist und mindestens eine Verbindungsschicht umfasst, wobei die Verbindungsschicht ein Material umfassend mindestens einen Butylkautschuk und/oder mindestens ein Polyisobutylen aufweist, wobei die mindestens eine Verbindungslage zwischen den zwei Trägerlagen angeordnet ist, und wobei mindestens eine weitere Lage des Korrosionsschutzbandes als Korrosionsschutzlage ausgebildet ist und auf mindestens einer freiliegenden Oberfläche mindestens einer Trägerlage angeordnet ist, wobei auf mindestens einer Oberfläche der Tragschicht mindestens einer der Trägerlagen eine Haftvermittlungsschicht angeordnet ist, wobei die Tragschichten der mindestens zwei Trägerlagen aus einem Trägermaterial gebildet sind umfassend mindestens ein Polyethylen, ein Polypropylen, ein Polyvinylchlorid, ein thermoplastisches Elastomer und/oder ein Metall.

Ein Korrosionsschutzband im Sinne der vorliegenden Erfindung dient insbesondere einer korrosionsschützenden Versehung, insbesondere einer Umwicklung, von Rohren, Pipelines, rohrförmigen Gegenständen, Rohrleitungen und Rohrleitungsbauteilen sowie dem Korrosionsschutz von Tanks und Bestandteilen von Tanks als auch sonstigen Anlagen und Einbauten. Das Korrosionsschutzband weist eine innere Oberfläche und eine äußere Oberfläche auf, wobei die äußere Oberfläche der inneren Oberfläche gegenüber liegt. Die innere Oberfläche liegt angrenzend an das vor Korrosion zu schützende Bauteil an. Ferner weist das Korrosionsschutzband eine Länge, eine Breite und eine Stärke auf. Die Länge und die Breite definieren jeweils gegenüberliegende Seiten des Bandes, wobei die Länge der längeren Seite, auch Längsrand genannt, des Bandes zugeordnet ist. Die Stärke oder auch Dicke ist eine zur Oberfläche senkrecht angeordnete Seite des Bandes und definiert einen Abstand der inneren Oberfläche zur äußeren Oberfläche. Bevorzugt weist das Korrosionsschutzband einen ersten Längsrand und einen zweiten, dem ersten Längsrand gegenüberliegendem Längsrand auf. In den Endbereichen des Korrosionsschutzbandes sind zwischen den beiden dort endenden ersten und zweiten Längsrändern Stirnränder angeordnet. Die Längsränder definieren die längere Seite des Korrosionsschutzbandes und damit die Länge des Bandes. Eine Länge des Bandes liegt bevorzugt in einem Bereich zwischen etwa 0,1 m und etwa 200 m, weiter bevorzugt zwischen etwa 1 m und etwa 140 m, noch weiter bevorzugt zwischen etwa 5 m und etwa 70 m.

Erfindungsgemäß weist das Korrosionsschutzband mindestens vier Lagen auf. Eine Lage definiert einen einzelnen Abschnitt des Korrosionsschutzbandes, der sich im Wesentlichen flächenhaft vollständig über die gesamte Fläche des Korrosionsschutzbandes erstreckt. Eine einzelne Lage des Korrosionsschutzbandes umfasst eine erste Oberfläche und eine zweite Oberfläche, wobei die zweite Oberfläche der ersten Oberfläche gegenüber liegt. Die erste oder zweite Oberfläche einer Lage ist im Wesentlichen parallel zur inneren/unteren oder äußeren/oberen Oberfläche des Korrosionsschutzbandes angeordnet. Ferner weist eine Lage eine Länge, eine Breite und eine Stärke, wie auch das Korrosionsschutzband an sich, auf. Die Länge und die Breite definieren jeweils gegenüberliegende Seiten der Lage, wobei die Länge der längeren Seite der Lage zugeordnet ist. Die Stärke oder Dicke definiert einen Abstand der ersten Oberfläche zur zweiten Oberfläche der jeweiligen Lage. Eine Anordnung mehrere Lagen erfolgt bevorzugt nach Art eines Stapels, wobei die Anordnung durch in Kontakt bringen der ersten oder zweiten Oberfläche einer Lage mit der ersten oder zweiten Oberfläche einer weiteren Lage erfolgt. Mehrere aufeinander angeordnete Lagen umfassen eine erste äußere Lage, eine zweite äußere Lage und zwischen der ersten äußeren und der zweiten äu-ßeren Lage angeordnet mindestens eine mittlere Lage. Die Oberfläche der ersten äußeren oder der zweiten äußeren Lage, die gegenüberliegend auf einer Oberfläche einer mittleren Lage angeordnet sind, ist eine freiliegende Oberfläche. Die Stärken oder Dicken der einzelnen Lagen ergeben aufsummiert die Stärke beziehungsweise Dicke des Korrosionsschutzbandes. Eine Lage des Korrosionsschutzbandes umfasst mindestens eine Schicht, bevorzugt umfasst eine Lage des Korrosionsschutzbandes mindestens zwei, weiter bevorzugt mehrere Schichten. Das Korrosionsschutzband weist erfindungsgemäß mindestens vier Lagen auf, bevorzugt weist es vier, fünf, sechs oder sieben Lagen auf. Es ist im Sinne der vorliegenden Erfindung auch möglich, dass das Korrosionsschutzband mehr als sieben Lagen aufweist.

Das erfindungsgemäße Korrosionsschutzband ist bevorzugt gereckt. Es kann auch nur eine Lage, bevorzugt eine Trägerlage der Korrosionsschutzbandes, gereckt sein.

Erfindungsgemäß umfasst das Korrosionsschutzband mindestens zwei Lagen als Trägerlagen, die einen mindestens einschichtigen Träger umfassen. Eine Trägerlage ist definiert als die Lage, die einen Träger des Korrosionsschutzbandes umfasst. Das Korrosionsschutzband umfasst mindestens zwei Lagen als Trägerlagen. Bevorzugt umfasst das Korrosionsschutzband genau zwei Lagen als Trägerlagen. Das Korrosionsschutzband kann auch mehr als zwei Trägerlagen aufweisen. Erfindungsgemäß ist der Träger mindestens einschichtig ausgebildet. Bevorzugt weist der Träger mindestens eine weitere, zweite Schicht auf. Bevorzugt weist der Träger mindestens eine weitere, dritte Schicht auf. Erfindungsgemäß kann der Träger mehr als drei Schichten aufweisen, bevorzugt ist er einschichtig, zweischichtig oder dreischichtig aufgebaut. Eine Schicht des Trägers umfasst eine erste Oberfläche und eine zweite Oberfläche, wobei die zweite der ersten Oberfläche gegenüber liegt. Die erste oder zweite Oberfläche einer Schicht des Trägers ist im Wesentlichen parallel zur ersten oder zweiten Oberfläche der Trägerlage angeordnet. Erfindungsgemäß ist mindestens eine Schicht des Trägers als Tragschicht ausgebildet. Die Tragschicht ist definiert als die Schicht, die als tragende Schicht im Träger wirkt und auch dem Korrosionsschutzband Stabilität verleihen kann. Bevorzugt weist eine Trägerlage genau eine Tragschicht auf. Die Tragschicht weist eine erste Oberfläche und eine zweite Oberfläche auf, wobei die erste Oberfläche der zweiten Oberfläche gegenüberliegen. Die mindestens eine weitere, zweite Schicht und die mindestens eine weitere, dritte Schicht sind entweder auf der ersten oder der zweiten Oberfläche der Tragschicht angeordnet. Die mindestens eine weitere, dritte Schicht ist bevorzugt auf der jeweils anderen ersten oder zweiten Oberfläche der Tragschicht gegenüberliegend der mindestens einen weiteren, zweiten Schicht und damit derart angeordnet, dass die Tragschicht zwischen einer zweiten und einer dritten Schicht angeordnet ist. Erfindungsgemäß sind die Tragschichten der mindestens zwei Trägerlagen aus einem Trägermaterial gebildet umfassend mindes-tens ein Polyethylen, ein Polypropylen, ein Polyvinylchlorid, ein thermoplastisches Elastomer und/oder ein Metall. Bevorzugt sind die Tragschichten der mindestens zwei Trägerlagen aus dem gleichen Trägermaterial gebildet.

Besonders bevorzugt umfasst das Korrosionsschutzband mindestens vier Lagen, wobei mindestens zwei Lagen des Korrosionsschutzbandes als Trägerlagen einen mindestens einschichtigen Träger umfassen, wobei mindestens eine Schicht des Trägers als Tragschicht ausgebildet ist, wobei die Tragschicht aus einem Trägermaterial gebildet ist, umfassend mindestens ein Polyethylen, ein Polypropylen, ein Polyvinylchlorid, ein thermoplastisches Elastomer und/oder ein Metall, wobei bevorzugt die Tragschichten der mindestens zwei Trägerlagen aus dem gleichen beziehungsweise identischen Trägermaterial gebildet sind, wobei mindestens eine weitere Lage des Korrosionsschutzbandes als Verbindungslage ausgebildet ist und mindestens eine Verbindungsschicht umfasst, wobei die Verbindungsschicht ein Material umfasst umfassend mindestens einen Butylkautschuk und/oder mindestens ein Polyisobutylen aufweist, wobei die mindes-tens eine Verbindungslage zwischen den mindestens zwei Trägerlagen angeordnet ist, und wobei mindestens eine weitere Lage des Korrosionsschutzbandes als Korrosionsschutzlage ausgebildet ist, wobei die Korrosionsschutzlage ein Material umfasst ausgewählt aus einer Gruppe umfassend mindestens einen Butylkautschuk und/oder mindestens ein Polyisobutylen, wobei besonders bevorzugt die Korrosionsschutzlage und die Verbindungslage aus dem gleichen Material gebildet sind, und die Korrosionsschutzlage auf mindestens einer freiliegenden Oberfläche mindestens einer Trägerlage angeordnet ist. Besonders bevorzugt kann bei dieser Ausführungsform mindestens ein elektrisch leitfähiges Material und/oder Kernmaterial in der Korrosionsschutzlage und/oder der Verbindungslage vorhanden sein. Weiter bevorzugt ist das Material der Verbindungslage und der Korrosionsschutzlage identisch

Das mindestens eine Polyethylen, das als Trägermaterial eingesetzt werden kann, ist bevorzugt ausgewählt aus einer Gruppe umfassend Polyethylen hoher Dichte (HDPE), Polyethylen mittlerer Dichte (MDPE), Polyethylen niedriger Dichte (LDPE), lineares Polyethylen niedriger Dichte (LLDPE), hochmolekulares Polyethylen (PE-HMW) und/oder ultrahochmolekulares Polyethylen (PE-UHMW), wobei besonders bevorzugt mindestens ein MDPE und/oder mindes-tens ein HDPE eingesetzt ist. Ein MDPE weist bevorzugt eine Dichte zwischen etwa 0,926 g/cm$^3$ und etwa 0,939 g/cm$^3$, ein HDPE zwischen etwa 0,94 g/cm$^3$ und 0,97 g/cm$^3$ auf. Das mindestens eine Polypropylen, das ebenfalls als Trägermaterial eingesetzt werden kann, ist bevorzugt ausgewählt aus einer Gruppe umfassend isotaktisches Polypropylen (iPP), syndiotaktisches Polypropylen (sPP) und/oder ataktisches Polypropylen (aPP), wobei vorzugsweise ein isotaktisches Polypropylen ausgewählt ist. Das isotaktische Polypropylen ist bevorzugt ausgewählt aus einer Gruppe umfassend Homopolymere, Block-Copolymere und/oder Random-Copolymere. Als Copolymer wird bevorzugt Ethen eingesetzt. Das mindestens einen Polyethylen und/oder Polypropylen kann dabei in Form eines Masterbatches eingesetzt sein und insbesondere einen Pigmentzusatz aufweisen. Als Pigmente können beispielsweise Ruß oder Farbpigmente zugesetzt sein in einer Menge von etwa 0,5 Gew.-% bis etwa 10 Gew.-%, weiter bevorzugt in einer Menge in einem Bereich von etwa 1 Gew.-% bis etwa 4 Gew.-%, bezogen auf die Gesamtmenge der Tragschicht.

Polyvinylchlorid (PVC), das ebenfalls als Trägermaterial eingesetzt werden kann, ist ein spezifisches thermoplastisches Polymer, das durch Kettenpolymerisation aus dem Monomer Vinylchlorid hergestellt wird. Die Polyvinylchloride werden in Hart- und Weich-Polyvinyl-chloride unterteilt. Weich-Polyvinylchlorid enthält Weichmacher, die zu einem elastischen Verhalten des Materials führen. Weich-Polyvinylchlorid ist beispielsweise ein in der Tragschicht einsetzbares Trägermaterial. Thermoplastische Elastomere, die ebenfalls als Trägermaterial eingesetzt werden können, sind Polymere, die sich bei Raumtemperatur vergleichbar den klassischen Elastomeren verhalten, sich jedoch unter Wärmezufuhr plastisch verformen lassen und somit ein thermoplastisches Verhalten zeigen. Das mindestens eine thermoplastische Elastomer (TPE) ist bevorzugt ausgewählt aus einer Gruppe umfassend thermoplastische Styrol-Blockcopolymere (TPS-SEBS) und/oder thermoplastische Copolyesterelastomere (TPC-ET). Der grundlegende molekulare Aufbau der TPS-SEBS basiert auf Styrol-Ethenbuten-Styrol-Blockcopolymeren, bei denen die Styrol-Blöcke die Hartsegmente und die Ethenbuten-Blöcke die Weichsegmente bilden. TPC-ET sind Copolyester-basierte TPEs mit Polyether-Weichsegmenten. TPC-ET besitzen eine gewisse Beständigkeit gegen höhere Temperaturen (Einsatzbereich bis etwa 160 °C) und auftretende Beschädigungen (hohe Festigkeit und Zähigkeit).

Bevorzugt weist ein als Trägermaterial einsetzbares TPS-SEBS einen oder mehrere der folgenden Parameter auf: eine Reißfestigkeit gemäß DIN 53504 (S2):201 7-03 in einem Bereich von etwa 20 N/mm$^2$ bis etwa 25 N/mm$^2$ in Längsrichtung und in einem Bereich von etwa 20 N/mm$^2$ bis etwa 25 N/mm$^2$ in Querrichtung, eine Reißdehnung gemäß DIN 53504 (S2):2017-03 in einem Bereich von etwa 600 % bis etwa 700 % in Längsrichtung und in einem Bereich von etwa 650 % bis etwa 750 % in Querrichtung, eine Spannung bei 50 % Dehnung gemäß DIN 53504 (S2):2017-03 in einem Bereich von etwa 8 N/mm$^2$ bis etwa 10 N/mm$^2$ in Längsrichtung und in einem Bereich von etwa 8 N/mm$^2$ bis etwa 10 N/mm$^2$ in Querrichtung und eine Dichte gemäß DIN EN ISO 1183-1:2013-04 in einem Bereich von etwa 0,8 g/cm$^3$ bis etwa 0,95 g/cm$^3$ auf. Bevorzugt weist ein als Trägermaterial einsetzbares TPC-ET einen oder mehrere der folgenden Parameter auf: eine Reißfestigkeit gemäß DIN 53504 (S2):2017-03 in einem Bereich von etwa 10 N/mm$^2$ bis etwa 20 N/mm$^2$ in Längsrichtung und in einem Bereich von etwa 12 N/mm$^2$ bis etwa 18 N/mm$^2$ in Querrichtung, eine Reißdehnung gemäß DIN 53504 (S2):2017-03 in einem Bereich von etwa 450 % bis etwa 550 % in Längsrichtung und in einem Bereich von etwa 500 % bis etwa 650 % in Querrichtung, eine Spannung bei 50% Dehnung gemäß DIN 53504 (S2):2017-03 in einem Bereich von etwa 4 N/mm$^2$ bis etwa 14 N/mm$^2$ in Längsrichtung und in einem Bereich von etwa 4 N/mm$^2$ bis etwa 14 N/mm$^2$ in Querrichtung und eine Dichte gemäß DIN EN ISO 1183-1:2013-04 in einem Bereich von etwa 0,95 g/cm$^3$ bis etwa 1,2 g/cm$^3$ auf.

Wird im Rahmen der Erfindung der Begriff "etwa" oder "im Wesentlichen" im Zusammenhang mit Werten oder Wertebereichen oder aber Eigenschaften oder Geometrien verwendet, so ist darunter ein Toleranzbereich zu verstehen, den der Fachmann auf diesem Gebiet für üblich erachtet. Insbesondere ist ein Toleranzbereich im Zusammenhang mit Werten oder Wertebereichen bei Verwendung des Begriffs "etwa" von $\pm 20$ %, bevorzugt von $\pm 10$ % und weiter bevorzugt von $\pm 5$ % vorgesehen. Untergrenzen von Wertebereichen können somit um 5% bis 20 % unterschritten werden. Obergrenzen von Wertebereichen können somit um 5% bis 20% überschritten werden. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Erfindungsgemäß ist mindestens eine weitere Lage des Korrosionsschutzbandes als Verbindungslage ausgebildet, die bevorzugt mindestens eine Verbindungsschicht umfasst. Die Verbindungslage dient dazu, die Trägerlagen miteinander zu verbinden, aber bevorzugt auch dazu, das Korrosionsschutzband einfach funktionalisieren zu können, so dass das Korrosionsschutzband ergänzende Eigenschaften aufweist wie zum Beispiel eine gewisse Leitfähigkeit. Bevorzugt umfasst die Verbindungslage eine oder mehrere Verbindungsschichten, weiter bevorzugt ein oder zwei Verbindungsschichten.

Erfindungsgemäß ist die mindestens eine Verbindungsschicht hergestellt aus einem Material umfassend mindestens einen Butylkautschuk und/oder mindestens ein Polyisobutylen. Bevorzugt umfasst die mindestens eine Verbindungsschicht ein Material umfassend mindestens einen ersten, bevorzugt depolymerisierten, Butylkautschuk mit einer scheinbaren Viskosität nach Brookfield bei 66° C gemäß DIN EN ISO 2555 : 2000-01 in einem Bereich von etwa 400.000 mPa · s bis etwa 2.000.000 mPa · s und einem mittleren Molekulargewicht $M_W$ (auch mittlere Molmasse oder molekulare Masse genannt) in einem Bereich von etwa 20.000 bis etwa 60.000 und/oder mindestens ein erstes Polyisobutylen mit einer mittleren relativen Molmasse $\overline{M}_v$ in einem Bereich von etwa 14.000 g/mol, bevorzugt von etwa 30.000 g/mol, bis etwa 150.000 g/mol, bevorzugt bis etwa 100.000 g/mol, und einem Staudinger-Index $J_0$ in einem Bereich von etwa 15 cm$^3$/g bis etwa 70 cm$^3$/g und mindestens einen zweiten Butylkautschuk und/oder mindestens ein zweites Polyisobutylen. Der mindestens eine zweite, bevorzugt zumindest teilweise vernetzte, weiter bevorzugt teilweise vernetzte, Butylkautschuk weist bevorzugt eine Mooney-Viskosität ML(1+3) bei 127°C in einem Bereich von etwa 65 MU bis etwa 100 MU gemäß ISO 289 : 2005 auf. Das mindestens eine zweite Polyisobutylen weist bevorzugt einen Staudinger-Index $J_0$ in einem Bereich von etwa 75 cm$^3$/g bis etwa 235 cm$^3$/g und mit einer mittleren relativen Molmasse $\overline{M}_v$ in einem Bereich von etwa 150.000 g/mol, bevorzugt von etwa 160.000 g/mol, bis etwa 950.000 g/mol, bevorzugt bis etwa 850.000 g/mol, auf. Weiter bevorzugt umfasst das Material der mindestens einen Verbindungsschicht einen dritten Butylkautschuk und/oder ein drittes Polyisobutylen. Der mindestens eine dritte, bevorzugt feste, Butylkautschuk weist bevorzugt ein mittleres Molekulargewicht $M_W$ in einem Bereich von etwa 150.000 bis etwa 2.000.000 und eine Mooney-Viskosität ML(1+8) bei 125°C in einem Bereich von etwa 20 MU bis etwa 62 MU, gemessen gemäß ISO 289 : 2005, auf. Das mindestens eine dritte Polyisobutylen weist bevorzugt eine mittlere relative Molmasse $\overline{M}_v$ in einem Bereich von etwa 900.000 g/mol, bevorzugt von etwa 950.000 g/mol, bis etwa 7.500.000 g/mol, bevorzugt bis etwa 6.500.000 g/mol, und einen Staudinger-Index $J_0$ in einem Bereich von etwa 240 cm$^3$/g bis etwa 900 cm$^3$/g auf. Bevorzugt umfasst die mindes-tens eine Verbindungsschicht ein Material ausgewählt aus einer Gruppe umfassend mindes-tens ein erstes Polyisobutylen und/oder einen ersten Butylkautschuk und mindestens ein zweites Polyisobutylen und/oder einen zweiten Butylkautschuk. Weiter bevorzugt umfasst die Verbindungslage ein Material ausgewählt aus einer Gruppe umfassend mindestens ein erstes Polyisobutylen und/oder einen ersten Butylkautschuk, mindestens ein zweites Polyisobutylen und/oder einen zweiten Butylkautschuk, und mindestens ein drittes Polyisobutylen und/oder einen dritten Butylkautschuk. Besonders bevorzugt umfasst die mindestens eine Verbindungsschicht mindestens ein erstes oder mindestens ein zweites Polyisobutylen als auch mindestens einen ersten oder mindestens einen zweiten Butylkautschuk. Noch weiter bevorzugt umfasst die mindestens eine Verbindungsschicht einen ersten, einen zweiten und gegebenenfalls einen dritten Butylkautschuk, und kein Polyisobutylen. Noch weiter bevorzugt umfasst die mindestens eine Verbindungsschicht ein erstes, ein zweites und gegebenenfalls ein drittes Polyisobutylen, und keinen Butylkautschuk. Alternativ umfasst die Verbindungslage nur einen zweiten Butylkautschuk oder nur ein zweites Polyisobutylen. In einer weiteren alternativen Ausgestaltung umfasst die Verbindungslage nur einen dritten Butylkautschuk oder nur ein drittes Polyisobutylen. In einer weiteren alternativen Ausgestaltung umfasst die mindestens eine Verbindungslage ein Material ausgewählt aus einer Gruppe umfassend mindestens ein zweites Polyisobutylen und/oder einen zweiten Butylkautschuk und mindestens ein drittes Polyisobutylen und/oder einen dritten Butylkautschuk, bevorzugt ein zweites Polyisobutylen und einen dritten Butylkautschuk oder ein drittes Polyisobutylen und einen zweiten Butylkautschuk. Es kann aber auch ein zweites und ein drittes Polyisobutylen von der Verbindungslage umfasst sein oder ein zweiter und ein dritter Butylkautschuk.

Der Staudinger-Index $J_0$ wurde früher auch als Intrinsische Viskosität bezeichnet. Er wird berechnet aus der Flusszeit bei 20° C durch eine Kapillare eines Ubbelohde-Viskosimeters nach der folgenden Formel (Schulz-Blaschke-Gleichung):

$$J_0 = \eta_{sp}/c \ (1+0{,}31^x\eta_{sp}) \ cm^3/g$$

wobei

$$\eta_{sp} = \frac{t}{t_o} - 1 \ \text{(spezifische Viskosität),}$$

wobei t die Fließzeit der Lösung mit einer Hagenbach-Couette Korrektur, $t_0$ die Fließzeit des Lösemittels Isooktan mit Hagenbach-Couette Korrektur und c die Konzentration der Lösung in g/cm$^3$ angibt. Die mittlere relative Molmasse $\overline{M}_v$ (Viskositätsmittel) berechnet sich aus der folgenden Formel:

$$\sqrt[0.65]{\dfrac{J_o \times 10^2}{3.06}}$$

Polyisobutylene im Sinne der vorliegenden Erfindung werden bevorzugt über eine kationische Polymerisation von Isobuten (2-Methylpropen) synthetisiert in einem Temperaturbereich zwischen etwa -100°C und etwa 0°C. Die Temperatur beeinflusst dabei die Molmasse des solchermaßen erzeugten Polyisobutens, je niedriger die Temperatur ist, desto höher ist die Molmasse desselben. Üblicherweise werden Bortrifluorid oder Aluminiumtrichlorid in wässriger oder alkoholischer Lösung als Initiatoren eingesetzt.

Das mindestens eine erste Polyisobutylen weist vorteilhafterweise einen Staudinger-Index $J_0$ in einem Bereich von etwa 22 cm$^3$/g bis etwa 65 cm$^3$/g auf, und noch weiter bevorzugt einen Staudinger-Index $J_0$ in einem Bereich von etwa 25 cm$^3$/g bis etwa 45 cm$^3$/g. Bevorzugt weist das mindestens eine erste Polyisobutylen eine mittlere relative Molmasse $\overline{M}_V$ (Viskositätsmittel) in einem Bereich von etwa 24.000 g/mol, bevorzugt von etwa 35.000 g/mol, bis etwa 1 30.000 g/mol, bevorzugt bis etwa 95.000 g/mol, und weiter bevorzugt eine mittlere relative Molmasse $\overline{M}_V$ in einem Bereich von etwa 30.000 g/mol, bevorzugt von etwa 37.000 g/mol, bis etwa 75.000 g/mol, bevorzugt bis etwa 70.000 g/mol, auf. Das mindestens eine erste Polyisobutylen ist vorteilhafterweise in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der mindestens einen Verbindungsschicht, von dieser umfasst.

Das mindestens eine zweite Polyisobutylen weist bevorzugt einen Staudinger-Index $J_0$ in einem Bereich von etwa 106 cm$^3$/g bis etwa 160 cm$^3$/g auf. Bevorzugt weist das mindestens eine zweite Polyisobutylen eine mittlere relative Molmasse $\overline{M}_V$ in einem Bereich von etwa 250.000 g/mol bis etwa 600.000 g/mol, bevorzugt bis etwa 550.000 g/mol, auf. Bevorzugt ist das mindestens eine zweite Polyisobutylen in einer Menge in einem Bereich von etwa 10 Gew.-% bis etwa 35 Gew.-%, weiter bevorzugt in einer Menge in einem Bereich von etwa 13 Gew.-% bis etwa 28 Gew.-%, jeweils bezogen auf die Gesamtmenge der mindestens einen Verbindungsschicht, von dieser umfasst.

Das mindestens eine dritte Polyisobutylen weist bevorzugt einen Staudinger-Index $J_0$ in einem Bereich von etwa 400 cm$^3$/g bis etwa 800 cm$^3$/g, und noch weiter bevorzugt einen Staudinger-Index $J_0$ in einem Bereich von etwa 500 cm$^3$/g bis etwa 700 cm$^3$/g, auf. Bevorzugt weist das mindestens eine dritte Polyisobutylen eine mittlere relative Molmasse $\overline{M}_V$ in einem Bereich von etwa 1.500.000 g/mol, bevorzugt von etwa 2.000.000 g/mol, bis etwa 6.000.000 g/mol, bevorzugt bis etwa 5.000.000 g/mol, weiter bevorzugt in einem Bereich von etwa 3.000.000 g/mol bis etwa 5.000.000 g/mol, bevorzugt bis etwa 4.800.000 g/mol, auf. Das mindestens eine dritte Polyisobutylen ist vorteilhafterweise in einer Menge in einem Bereich von etwa 1 Gew.-% bis etwa 20 Gew.-%, weiter bevorzugt in einer Menge in einem Bereich von etwa 2 Gew.-% bis etwa 10 Gew.-%, noch weiter bevorzugt in einer Menge in einem Bereich von etwa 3 Gew.-% bis etwa 8 Gew.-%, jeweils bezogen auf die Gesamtmenge der mindestens einen Verbindungsschicht, von dieser umfasst.

Das Verhältnis des mindestens einen ersten Polyisobutylens, also der Gesamtmenge des eingesetzten ersten Polyisobutylens, auch wenn eine Mischung vorliegt, zu dem mindes-tens einen zweiten Polyisobutylen, das heißt der Gesamtmenge des zweiten Polyisobuty-lens, auch wenn dies in einer Mischung vorliegt, liegt vorteilhafterweise in einem Bereich von etwa 2,5 : 1 bis etwa 1 : 2,5, weiter bevorzugt in einem Bereich von etwa 2,2 : 1 bis etwa 1 : 1.

Die eingesetzten Polyisobutylene, also sowohl das erste, das zweite, als auch das dritte Polyisobutylen, weisen vorteilhafterweise eine Glasübergangstemperatur $T_g$ (kalorimetrisch durch DSC gemessen) von weniger als -50°C, weiter bevorzugt weniger als -58°C, auf. Besonders bevorzugt liegt die Glasübergangstemperatur des mindestens einen ersten, des mindestens einen zweiten und des mindestens eins dritten Polyisobutylens in einem Bereich von etwa -55°C bis etwa -68°C, weiter bevorzugt in einem Bereich von etwa -58°C bis etwa -66°C. Das höher molekulare, mindestens eine zweites Polyisobutylen kann damit noch als eine hochviskose Flüssigkeit angesprochen werden, und weist eine gewisse Kriechneigung auf.

Unter dem Begriff Butylkautschuk werden im Sinne der vorliegenden Erfindung insbesondere verstanden Co- oder Block-Co-Polymere von Isobuten mit etwa 0,5 Gew.-% bis etwa 5 Gew.-% Isopren, bezogen auf die Gesamtmenge des Butylkautschuks, die insbesondere durch kationische Polymerisation hergestellt werden. Über das eingesetzte Isopren und die in diesem vorhandenen Kohlenstoff-Kohlenstoff-Doppelbindungen, die als funktionelle Gruppen wirken, kann eine Vernetzungsreaktion initiiert werden. Im Sinne der vorliegenden Erfindung fallen unter den Begriff Butylkautschuk insbesondere auch halogenierte Butylkautschuke, insbesondere solche, die chloriert bzw. bromiert sind (Chlorbutylkautschuk bzw. Brombutylkautschuk). Es können auch Gemische mehrerer Butylkautschuke eingesetzt werden, das heißt mehr als mindestens ein Butylkautschuk.

Der mindestens eine erste, bevorzugt depolymerisierte, Butylkautschuk wird bevorzugt durch Depolymerisation von Butylkautschuken (IIR) erhalten. Der mindestens eine erste Butylkautschuk weist ein geringes Molekulargewicht auf. Er liegt besonders bevorzugt bei 23°C in flüssiger Form vor. Dem gegenüber ist der mindestens eine dritte Butylkautschuk nicht depolymerisiert und weist ein im Vergleich zum ersten Butylkautschuk hohes Molekulargewicht auf. Der mindestens eine dritte Butylkautschuk liegt vorteilsweise bei 23°C in fester Form vor.

Der mindestens eine erste, bevorzugt depolymerisierte, Butylkautschuk weist bevorzugt eine scheinbare Viskosität nach Brookfield gemäß DIN EN ISO 2555 : 2000-01 bei 66°C in einem Bereich von etwa 600.000 mPa ·s bis etwa 1.600.000 mPa ·s, weiter bevorzugt in einem Bereich von etwa 700.000 mPa ·s bis etwa 1.500.000 mPa ·s, auf. Bevorzugt weist der mindestens eine erste, bevorzugt depolymerisierte, Butylkautschuk ein mittleres Molekulargewicht $M_w$ in einem Bereich von etwa 20.000 bis etwa 60.000 auf. Der mindestens eine erste, bevorzugt depolymerisierte, Butylkautschuk weist vorteilhafterweise die Eigenschaft auf, bereits bei niedrigen Temperaturen, insbesondere bei Raumtemperaturen von beispielsweise 20°C oder 23°C, oder aber auch bei leicht erhöhten Temperaturen von beispielsweise 40°C bis 50°C, eine Vernetzungsreaktion aufgrund der in diesem vorhandenen ungesättigten Kohlenstoff-Kohlenstoff-Doppelbindungen einzugehen. Bevorzugt ist der erste Butylkautschuk von der Verbindungslage in einer Menge in einem Bereich von etwa 20 Gew.-% bis etwa 66 Gew.-%, bevorzugt in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der mindestens einen Verbindungsschicht, von dieser umfasst.

Der mindestens eine zweite, zumindest teilweise vernetzte (im Folgenden auch als teilweise vorvernetzt bezeichnet) Butylkautschuk, der einen geringeren Anteil ungesättigter Bindungen aufweist als übliche Butylkautschuke, weist bevorzugt eine Mooney-Viskosität ML(1+3) bei 127°C in einem Bereich von etwa 70 MU bis etwa 93 MU, weiter bevorzugt in einem Bereich von etwa 78 MU bis etwa 91 MU, gemessen gemäß ISO 289 : 2005 oder gemäß ASTM 1604-04, auf. Die spezifische Dichte des mindestens einen zweiten, teilweise vernetzten Butylkautschuks liegt vorteilhafterweise bei einer Temperatur von 25 °C gemäß ASTM D1875 in der Version von 2003 in einem Bereich von etwa 0,5 bis etwa 1,1, bevorzugt in einem Bereich von etwa 0,9 bis etwa 0,98. Besonders bevorzugt ist der zweite Butylkautschuk in einer Menge in einem Bereich von etwa 1 Gew.-% bis etwa 20 Gew.-%, weiter bevorzugt in einer Menge in einem Bereich von etwa 2 Gew.-% bis etwa 10 Gew.-%, noch weiter bevorzugt in einer Menge in einem Bereich von etwa 3 Gew.-% bis etwa 8 Gew.-%, jeweils bezogen auf die Gesamtmenge der mindestens einen Verbindungsschicht, von der mindestens einen Verbindungsschicht umfasst.

Der mindestens eine dritte Butylkautschuk weist vorteilhafterweise ein mittleres Moleku-largewicht $M_w$ in einem Bereich von etwa 200.000 bis etwa 1.800.000, weiter bevorzugt in einem Bereich von etwa 250.000 bis etwa 600.000, auf. Bevorzugt weist der mindestens eine dritte Butylkautschuk eine Mooney-Viskosität ML(1+8) bei 125°C in einem Bereich von etwa 30 MU bis etwa 60 MU, weiter bevorzugt in einem Bereich von etwa 40 MU bis etwa 59 MU, noch weiter bevorzugt in einem Bereich von etwa 40 MU bis etwa 55 MU, gemessen gemäß ISO 289 : 2005, auf. Der mindestens eine dritte Butylkautschuk ist vorteilhafterweise in einer Menge in einem Bereich von etwa 10 Gew.-% bis etwa 50 Gew.-%, weiter bevorzugt in einer Menge in einem Bereich von etwa 15 Gew.-% bis etwa 35 Gew.-%, jeweils bezogen auf die Gesamtmenge der mindestens einen Verbindungsschicht, von der mindestens einen Verbindungsschicht umfasst.

Vorteilhafterweise weist der mindestens eine dritte Butylkautschuk Werte für die Ungesättigtheit in einem Bereich von etwa 1 Mol-% bis etwa 3 Mol-%, weiter bevorzugt in einem Bereich von etwa 1,3 Mol-% bis etwa 2,5 Mol-%, auf. Dies bedeutet, dass bevorzugt etwa 1 Mol-% bis etwa 3 Mol-%, weiter bevorzugt etwa 1,3 Mol-% bis etwa 2,5 Mol-% ungesättigte Bindungen, das heißt Kohlenstoff-Kohlenstoff-Doppelbindungen, als funktionelle Gruppen in einem mindestens einen dritten Butylkautschuk vorliegen. Besonders bevorzugt ist der mindestens eine dritte Butylkautschuk hergestellt durch eine Co-Polymerisation von Isobuten und Isopren in Methylchlorid als Lösemittel. Die Ungesättigtheit (der Grad der Unsättigung) des mindestens einen dritten Butylkautschuks kann auch bei etwa 1,5 Mol-%, insbesondere bei etwa 1,5±0,5 Mol-%, liegen.

Bevorzugt umfasst die mindestens eine Verbindungsschicht neben Polyisobutylen und/oder Butylkautschuk mindestens ein Füllmaterial, mindestens ein Antioxidationsmittel, mindes-tens ein Vernetzungsmittel, mindestens ein Elastomer und/oder mindestens ein Stabilisationsmittel. Die genannten weiteren Bestandteile können alleine oder in Kombination der mindestens einen Verbindungsschicht zugesetzt sein. Besonders bevorzugt umfasst die mindestens eine Verbindungsschicht mindestens ein Füllmaterial. Das mindestens eine Füllmaterial ist vorzugsweise in einer Menge in einem Bereich von etwa 20 Gew.-% bis etwa 70 Gew.-%, weiter bevorzugt in einer Menge in einem Bereich von etwa 30 Gew.-% bis etwa 65 Gew.-%, und noch weiter bevorzugt in einer Menge in einem Bereich von etwa 33 Gew.-% bis etwa 50 Gew.-%, jeweils bezogen auf die Gesamtmenge der mindestens einen Verbindungsschicht, von dieser umfasst. Besonders bevorzugt ist das mindestens eine Füllmaterial pulverförmig oder faserförmig ausgebildet. Unter dem Begriff faserförmig fallen im Sinne der vorliegenden Erfindung auch solche Füllmaterialien, welche eine nadelförmige Struktur aufweisen. Besonders bevorzugt umfasst die mindestens einen Verbindungsschicht mindes-tens ein erstes pulverförmiges Füllmaterial und mindestens ein zweites faserförmiges Füllmaterial. Besonders bevorzugt ist bei einer solchen kombinierten Zugabe mindestens eines pulverförmigen und mindestens eines faserförmigen Füllmateriales das faserförmige Füllmaterial in einer Menge bis maximal zu derjenigen des pulverförmigen Füllmateriales zugegeben. Ein pulverförmiges als auch ein faserförmiges Füllmaterial können in einer Menge in einem Bereich von etwa 10 Gew.-% bis etwa 40 Gew.-%, bevorzugt in einer Menge in einem Bereich von etwa 12 Gew.-% bis etwa 25 Gew.-%, jeweils bezogen auf die Gesamtmenge der mindestens einen Verbindungsschicht, jeweils von der mindestens einen Verbindungsschicht umfasst sein.

Bevorzugt ist das mindestens eine Füllmaterial ausgewählt aus einer Gruppe der pulverförmigen mineralischen Füllstoffe oder der mineralischen und/oder organischen faserartigen Füllstoffe. Beispielsweise kann es aus Metall, Zinkoxid, Cellulosefasern, Wollastonit in Nadelform oder ähnlichem sein. Es kann auch ausgewählt sein aus einer Gruppe organischer Fasern wie beispielsweise aus Acrylnitrilfasern mit einer Länge in einem Bereich von etwa 1,5 mm bis etwa 20 mm, weiter bevorzugt mit einer Länge in einem Bereich von etwa 4 mm bis etwa 15 mm, und einer Feinheit in einem Bereich von etwa 0,5 dtex bis etwa 100 dtex, weiter bevorzugt mit einer Feinheit in einem Bereich von etwa 1 dtex bis etwa 20 dtex, jeweils gemessen gemäß ISO 1144 in der Version von 1973. Soweit ein pulverförmiger Füllstoff, insbesondere ein mineralischer pulverförmiger Füllstoff, eingesetzt ist, weist dieser vorteilhafterweise einen Rückstand in % bei einer Siebanalyse gemäß der DIN 66165 in der Version 1987-04 bei H-100 (100 $\mu$m) von etwa 1 % bis etwa 5 %, bei H-60 (60$\mu$m) von etwa 1 % bis etwa 5 % und bei H-30 (30 $\mu$m) in einem Bereich von etwa 1 % bis etwa 5 % auf. Vorteilhafterweise weist die mindestens einen Verbindungsschicht mindestens ein Füllmaterial auf. Ist das Füllmaterial ein pulverförmiges, ist dieses vorteilhafterweise ausgewählt aus der Gruppe der mineralischen Füllstoffe, ist besonders bevorzugt ein Talkum.

Das mindestens eine Elastomer ist vorteilhafterweise ausgewählt aus einer Gruppe umfassend mindestens einen Ethylen-Propylen-Dien-Kautschuk. Hierunter werden insbesondere solche Co- oder Block-Co-Polymere als auch Terpolymere verstanden, welche als funktionelle Gruppen eine Kohlenstoff-Kohlenstoff-Doppelbindung aufweisen. Auch hiervon können Gemische eingesetzt werden. Besonders bevorzugt sind Terpolymere, die aus einer Polymerisationsreaktion mit Ethylen, Propylen und einem Dien entstehen. Diese werden auch EPDM-Terpolymere genannt und vereinigen ein gesättigtes Polymerrückgrat mit ungesättigten Resten in Seitengruppen. Besonders bevorzugt im Sinne der vorliegenden Erfindung werden dabei 5-Ethyliden-2-Norbornen, Dicyclopentadien und/oder 5-Vinyliden-2-Norbornen als Dien eingesetzt, und zwar in Mengen bis zu etwa 15 Gew.-%, bevorzugt in Mengen in einem Bereich von etwa 0,3 Gew.-% bis etwa 12 Gew.-%. Im Falle des Einsatzes von 5 Ethyliden-2-Norbornen werden vorzugsweise Men-gen in einem Bereich von etwa 0,5 Gew.-% bis etwa 11 Gew.-% und im Falle eines Einsatzes von Dicyclopentadien Mengen in einem Bereich von etwa 1,0 Gew.-% bis etwa 6,0 Gew.-% eingesetzt. Die vorstehenden Gew.-%-Angaben in diesem Absatz sind dabei bezogen auf die Gesamtmenge der Monomere, die in einer Polymerisation zu einem EPDM bzw. Ethylen-Propylen-Kautschuk eingesetzt sind.

Soweit mindestens ein Antioxidationsmittel vorgesehen ist, kann dieses, vorzugsweise in einer Mischung verschiedener Antioxidationsmittel, in einer Menge in einem Bereich von etwa 0,1 Gew.-% bis etwa 1 Gew.-%, weiter bevorzugt in einer Menge in einem Bereich von etwa 0,15 Gew.-% bis etwa 0,5 Gew.-%, jeweils bezogen auf die Gesamtmenge der mindestens einen Verbindungsschicht, von dieser umfasst sein. Ein Antioxidationsmittel ist eine chemische Verbindung, die eine Oxidation anderer Substanzen verlangsamt oder gänzlich verhindert. Das Antioxidationsmittel kann dabei insbesondere ausgewählt sein aus einer Gruppe umfassend sterisch gehinderte Phenole, wie beispielsweise Pentaerythriol-Tetrakis (3-(3,5-di-ter-butyl-4-Hydroxiphenyl) Propionat). Ein sterisch gehindertes phenolisches Antioxidationsmittel vermittelt einen Schutz vor einem thermooxidativem Abbau im erfindungsgemäßen Korrosionsschutzband. Sie weisen eine gute Verträglichkeit in diesem auf. Das Antioxidationsmittel kann in Kombination mit anderen Additiven wie Stabilisationsmittel verwendet werden. Das beispielhaft erwähnte Pentaerythriol-Tetrakis (3-(3,5-di-ter-butyl-4-Hydroxiphe-nyl) Propionat) ist pulverförmig, weiß bis weißlich, wasserunlöslich und weist ein Molekulargewicht von etwa 1176,5 g/mol und einen Schmelzbereich von etwa 110°C bis etwa 125°C auf. Weiter bevorzugt kann als Antioxidationsmittel Tris(2,4-di-tert-butylphenyl)phosphit eingesetzt werden. Tris(2,4-di-tert-butylphenyl)phosphit ist pulverförmig, weiß bis weißlich, weist ein Molekulargewicht von 646,92 g/mol und einen Schmelzbereich von etwa 181 °C bis etwa 184°C auf.

Soweit in der mindestens einen Verbindungsschicht mindestens ein Stabilisationsmittel, das auch als Dispergierhilfsmittel bezeichenbar ist, vorhanden ist, ist dieses vorteilhafterweise ausgewählt aus einer Gruppe umfassend C10- bis C24-Carbonsäuren, und ist vorteilhafterweise Stearinsäure. Das mindestens eine Stabilisationsmittel ist bevorzugt in einer Menge in einem Bereich von etwa 0,05 Gew.-% bis etwa 0,5 Gew.-%, bezogen auf die Gesamtmenge der mindestens einen Verbindungsschicht, von der mindestens einen Verbindungsschicht umfasst. Als Stabilisationsmittel können beispielsweise auch Metallsalze der angesprochenen Carbonsäuren, beispielsweise Zinkstearate, oder freie Carbonsäuren, wie beispielsweise freie Fettsäuren mit 12 bis 24 Kohlenstoffatomen, insbesondere Stearinsäure oder Ölsäure, eingesetzt werden.

Des Weiteren kann die mindestens einen Verbindungsschicht noch sonstige Zusätze, die üblich und notwendig je nach Einsatzzweck sind, aufweisen. Insbesondere kann die mindes-tens einen Verbindungsschicht weiterhin mindestens ein Flammenschutzmittel und/oder mindestens ein Vernetzungsmittel aufweisen. Soweit ein Flammschutzmittel vorgesehen ist, ist dieses vorteilhafterweise in einer Menge in einem Bereich von etwa 0,02 Gew.-% bis etwa 2 Gew.-%, bezogen auf die Gesamtmenge der mindestens einen Verbindungsschicht, von dieser umfasst.

Erfindungsgemäß ist mindestens eine weitere Lage des Korrosionsschutzbandes als Korrosionsschutzlage ausgebildet. Die Korrosionsschutzlage umfasst mindestens eine Korrosionsschutzschicht, weiter bevorzugt genau eine Korrosionsschutzschicht. Die Korrosionsschutzlage dient dem unmittelbaren Schutz von Bauteilen vor Korrosion, insbesondere von Rohren, Pipelines, rohrförmigen Gegenständen, Rohrleitungen und Rohrleitungsbauteilen, von Tanks und Bestandteilen von Tanks, Anlagen und Einbauten, da diese in unmittelbaren Kontakt mit dem zu schützenden Bauteil tritt. Bevorzugt bildet die Korrosionsschutzlage mindestens eine äußere Lage des Korrosionsschutzbandes. Besonders bevorzugt ist die mindes-tens eine Korrosionsschutzlage in Kontakt mit dem zu schützenden Rohr bzw. Bauteil. Weiter bevorzugt bildet die Korrosionsschutzlage eine erste äußere Lage und eine zweite äußere Lage des erfindungsgemäßen Korrosionsschutzbandes. Die Korrosionsschutzlage umfasst ein Material ausgewählt aus einer Gruppe umfassend mindestens einen Butylkautschuk und/oder mindestens ein Polyisobutylen. Die bevorzugten Butylkautschuke und/oder Polyisobutylene und deren Mischungen und Zusammensetzungen sind bereits weiter vorstehend im Zusammenhang mit der Ausbildung der Verbindungsschicht beschrieben. Die in Zusammenhang mit der Ausbildung der mindestens einen Verbindungsschicht gemachten Angaben gelten entsprechend für die Schicht beziehungsweise Schichten der Korrosionsschutzlage, wobei die Mengenangaben dann bezogen sind auf die Gesamtmenge der mindestens einen Korrosionsschutzschicht. Insbesondere kann die mindestens eine Verbindungsschicht und die mindestens eine Korrosionsschutzschicht Butylkautschuk und/oder Polyisobutylene umfassen, die identisch sind, so dass die mindestens eine Verbindungsschicht und die mindestens eine Korrosionsschutzschicht in Hinblick auf das Material und deren Eigenschaften ähnlich ausgebildet sein können. Die mindestens einen Verbindungsschicht und die mindestens eine Korrosionsschutzschicht können insbesondere auch identisch ausgebildet sein, soweit keine Funktionalisierung vorgesehen ist, beziehungsweise bis auf eine solche Funktionalisierung, beispielsweise durch ein leitfähiges Material, identisch sein. Eine jede Korrosionsschutzlage ist vorzugsweise ein- oder mehrschichtig, weiter bevorzugt einschichtig, ausgebildet.

Bevorzugt ist mindestens eine der Trägerlagen, bevorzugt beide Trägerlagen, derart ausgebildet, dass diese keine Fasern in einer Polymermatrix umfassen.

Bevorzugt ist die mindestens eine als Tragschicht ausgebildete Schicht mindestens einer der Trägerlagen als Folie, Vlies, Gewebe, Netz, Gelege, Gewirke, perforierte Folie oder Gitter ausgebildet, besonders bevorzugt ist die Tragschicht als Folie oder Gitter ausgebildet. Bevorzugt ist die Tragschicht als Folie, Vlies, Gewebe, Netz, Gelege, Gewirke, perforierte Folie oder Gitter ausgebildet, besonders bevorzugt ist die Tragschicht als Folie oder Gitter ausgebildet. Besonders bevorzugt sind die Tragschichten der mindestens zwei Trägerlagen als Folie, Vlies, Gewebe, Netz, Gelege, Gewirke, perforierte Folie oder Gitter ausgebildet, besonders bevorzugt sind die Tragschichten der mindestens zwei Trägerlagen als Folie oder Gitter ausgebildet. Besonders bevorzugt ist die Tragschicht bandförmig ausgebildet, kann aber auch mattenförmig oder sonst wie flächig ausgestaltet sein. Die Tragschicht kann insbesondere in Form einer Trägerfolie, eines Schrumpfbandes oder -schlauches, einer Streckbremse oder als Gitter ausgestaltet sein. Die Ausgestaltung als Trägerfolie oder als Streckbremse, die ebenfalls folien- und bevorzugt bandartig ausgebildet ist, unterscheidet sich insbesondere in ihrer Stärke. Soweit die Tragschicht als Trägerfolie ausgestaltet ist, weist diese vorteilhafterweise eine Stärke in einem Bereich von etwa 0,2 mm bis etwa 1,2 mm, weiter bevorzugt eine Stärke in einem Bereich von etwa 0,3 mm bis etwa 1,0 mm auf. Soweit die Tragschicht als Streckbremse ausgestaltet ist, weist diese bevorzugt eine Stärke in einem Bereich von etwa 15 $\mu$m bis etwa 100 $\mu$m, weiter bevorzugt in einem Bereich von etwa 20 $\mu$m bis etwa 75 $\mu$m auf. Die Funktion einer Streckbremse ist es, eine Überdehnung des Korrosionsschutzbandes zu verhindern, insbesondere bei einer spiralförmigen Wicklung desselben um ein zu umhüllendes Rohr, beispielsweise eine Pipeline, aber auch zum Beispiel bei der Aufbringung eines Korrosionsschutzes auf einem Boden eines Tanks, z.B. eines Öltanks. Die Trägerfolie oder die Streckbremse können auch gelocht ausgebildet sein. Soweit die Tragschicht als Gitter ausgebildet ist, weist diese bevorzugt Ausnehmungen auf, die durch eine überkreuzte Anordnung von länglichen Teilen ausgebildet werden. Die als Vlies, Gewebe, Netz, Gelege, Gewirke, perforierte Folie oder Gitter ausgebildete Tragschicht kann bei einem einschichtigen Träger die Trägerlage selbst bilden.

Erfindungsgemäß ist auf mindestens einer Oberfläche der Tragschicht mindestens einer der Trägerlagen als weitere Schicht der Trägerlage eine Haftvermittlungsschicht angeordnet. Bevorzugt ist auf mindestens einer Oberfläche der Tragschicht als weitere Schicht der Trägerlage eine Haftvermittlungsschicht angeordnet, noch weiter bevorzugt auf mindestens einer Oberfläche der Tragschichten der mindestens zwei Trägerlagen. Weiter bevorzugt weist die Tragschicht auf beiden Oberflächen derselben eine Haftvermittlungsschicht auf. Bei einer Aufbringung auf beiden Oberflächen der Tragschicht können die beiden dort aufgebrachten Haftvermittlungsschichten identisch sein, jedoch auch verschieden. Bevorzugt ist die Haftvermittlungsschicht vollflächig auf mindestens einer Oberfläche der Tragschicht aufgebracht. Die Haftvermittlungsschicht weist bevorzugt eine Haftvermittlungszusammensetzung auf, umfassend

- etwa 20 Gew.-% bis etwa 70 Gew.-% mindestens eines Polymers , ausgewählt aus einer Gruppe umfassend Polyethylene, Polypropylene, Polyvinylchlorids und/oder thermoplastischen Elastomere; und
- etwa 20 Gew.-% bis etwa 65 Gew.-% mindestens eines Butylkautschuks und/oder Polyisobutylens;

wobei die Angaben in Gewichtsprozent, abgekürzt als Gew.-%, jeweils bezogen sind auf die Gesamtmenge der Haftvermittlungsschicht.

Die Haftvermittlungsschicht weist weiter bevorzugt eine Haftvermittlungszusammensetzung auf, umfassend

- etwa 20 Gew.-% bis etwa 70 Gew.-% mindestens eines Polymers , ausgewählt aus einer Gruppe umfassend Polyethylene, Polypropylene, Polyvinylchlorids und/oder thermoplastischen Elastomere;
- etwa 20 Gew.-% bis etwa 65 Gew.-% mindestens eines Butylkautschuks und/oder Polyisobutylens; und
- etwa 6 Gew.-% bis etwa 35 Gew.-% mindestens einem Elastomer, ausgewählt aus einer Gruppe umfassend Ethylen-Propylen-Kautschuk und/oder Ethylen-Propylen-Dien-Kautschuk;

wobei die Angaben in Gewichtsprozent, abgekürzt als Gew.-%, jeweils bezogen sind auf die Gesamtmenge der Haftvermittlungsschicht.

Das mindestens eine Polymer in der Haftvermittlungsschicht liegt vorzugsweise in einer Menge in einem Bereich von etwa 30 Gew.-% bis etwa 60 Gew.-%, weiter bevorzugt in einer Menge in einem Bereich von etwa 32 Gew.-% bis etwa 55 Gew.-%, jeweils bezogen auf die Gesamtmenge der Haftvermittlungsschicht, in selbiger vor. Besonders bevorzugt umfasst die Haftvermittlungsschicht genau ein Polyethylen oder genau ein Polypropylen. Das mindestens eine Polyethylen und/oder Polypropylen ist in Hinblick auf seine chemischen und physikalischen Eigenschaften bevorzugt ein solches, wie dieses vorstehend in Zusammenhang mit der Tragschicht definiert ist.

Bevorzugt ist das mindestens eine Polymer in der mindestens einen, bevorzugt mindestens zwei, Haftvermittlungsschichten elektronenstrahlvernetzbar. Weiter bevorzugt ist auch das Trägermaterial, dass die Tragschicht bildet, elektronenstrahlvernetzbar. Besonders bevorzugt ist ein, bevorzugt elektronenstrahlvernetzbares, Polyethylen mittlerer Dichte oder höherer Dichte, oder aber ein Polypropylen, bevorzugt ein isotaktisches Polypropylen, eingesetzt, wobei bei Einsatz von Polypropylen dieses zu einer erfolgreichen Elektronenstrahlvernetzung bevorzugt als Masterbatch eingesetzt sein kann mit mindestens einem Vernetzungsbeschleuniger und ggf. geeigneten Copolymeren. Durch eine Elektronenstrahlvernetzung der elektronenstrahlvernetzbaren Polymere werden insbesondere deren Temperaturbeständigkeiten, aber auch mechanischen Festigkeiten verbessert. Soweit mindestens ein Polyethylen eingesetzt ist, weist dieses vorteilhafterweise eine Dichte von mindestens etwa 800 kg/m$^3$, gemessen gemäß ISO 1872-21 ISO 1183, und liegt bevorzugt in einem Bereich von etwa 850 kg/m$^3$ bis etwa 1.000 kg/m$^3$, weiter bevorzugt in einem Bereich von etwa 900 kg/m$^3$ bis etwa 980 kg/m$^3$. Soweit mindestens ein Polypropylen eingesetzt ist, weist dieses vorteilhafterweise eine Dichte von bevorzugt mindestens 800 kg/m$^3$, gemessen gemäß ISO 1872-2/ ISO 1183, auf und liegt bevorzugt in einem Bereich von etwa 850 kg/m$^3$ bis etwa 980 kg/m$^3$, weiter bevorzugt in einem Bereich von etwa 890 kg/m$^3$ bis etwa 960 kg/m$^3$. Eine Elektronenstrahlvernetzung erfolgt vorteilhafterweise mit $\beta$-Strahlen, kann jedoch auch mit $\gamma$-Strahlen erfolgen. Bevorzugt wird eine Bestrahlung mit einer Dosis in einem Bereich von etwa 25 kGy bis etwa 250 kGy erfolgen.

Das mindestens eine Polymer muss jedoch nicht elektronenstrahlvernetzbar sein, insbesondere dann, wenn andere, alternative Methoden der Vernetzung oder Verbindung zur Anwendung kommen können, wie etwa eine Wärmebehandlung. Mit einer Wärmebehandlung ist es ebenfalls möglich, die Haftvermittlungsschicht oder die Tragschicht zu vernetzen oder zu verbinden, beispielsweise mit einer Verbindungslage. Die Wärmebehandlung erfolgt bei einer Temperatur, bei der die Viskosität der Bestandteile der Tragschicht oder der Haftvermittlungsschicht, bei dieser vor allem des mindestens einen Butylkautschuks und/oder Polyisobutylens und/oder des mindestens einen Elastomeren, ausgewählt aus einer Gruppe umfassend Ethylen-Propylen-Kautschuk und/oder Ethylen-Propylen-Dien-Kautschuk, herabgesetzt ist, bevorzugt bei etwa 150°C bis etwa 200°C, weiter bevorzugt bei etwa 160°C bis etwa 180°C. Dies kann beispielsweise durch eine entsprechende Ausbildung einer Kalanderwalze erfolgen.

Bevorzugt ist der mindestens eine Butylkautschuk in der Haftvermittlungsschicht ausgewählt aus einer Gruppe umfassend zumindest teilweise vernetzte und/oder depolymerisierte Butylkautschuke, weiter bevorzugt solche, wie diese weiter oben in Hinblick auf deren chemische und physikalische Eigenschaften in Zusammenhang mit der mindestens einen Verbindungsschicht der Verbindungslage definiert sind. Besonders bevorzugt umfasst die Haftvermittlungsschicht genau einen Butylkautschuk, bevorzugt einen zumindest teilweise vernetzten Butylkautschuk. In einer alternativen Ausführungsform umfasst die Haftvermittlungsschicht bevorzugt genau einen zumindest teilweise vernetzten Butylkautschuk und genau einen depolymerisierten Butylkautschuk. Bevorzugt umfasst die Haftvermittlungsschicht mindestens einen Butylkautschuk in einer Menge von mindestens etwa 23 Gew.-% bis etwa 60 Gew.-%, weiter bevorzugt in einer Menge in einem Bereich von etwa 25 Gew.-% bis etwa 53 Gew.-%, jeweils bezogen auf die Gesamtmenge der Haftvermittlungsschicht. Soweit eine Mischung eines zumindest teilweise vernetzten Butylkautschuks mit einem unvernetzten Butylkautschuk vorgesehen ist, liegt der vernetzte Butylkautschuk in einer Menge in einem Bereich von etwa 5 Gew.-% bis etwa 95 Gew.-% und der depolymerisierte Butylkautschuk in einer Menge in einem Bereich von etwa 95 Gew.-% bis etwa 5 Gew.-% in einer solchen Mischung vor. Bevorzugt weist eine solche Mischung genau eines zumindest teilweise vernetzten Butylkautschuks und eines depolymerisierten Butylkautschuks den zumindest teilweise vernetzten Butylkautschuk in einer Menge in einem Bereich von etwa 45 Gew.-% bis etwa 95 Gew.-% und den unvernetzten Butylkautschuk in einer Menge in einem Bereich von etwa 5 Gew.-% bis etwa 55 Gew.-% auf. Weiter bevorzugt liegt das Verhältnis des depolymerisierten Butylkautschuks zu dem zumindest teileweise vernetzten Butylkautschuk in einer Mischung aus genau einem zumindest teilweise vernetzten Butylkautschuk und genau einem polymerisierten Butylkautschuk in der Haftvermittlungsschicht in einem Bereich von etwa 1,1:1 bis etwa 4:1.

Bevorzugt ist das mindestens eine Elastomer in der Haftvermittlungsschicht ein Ethylen-Propylen-Dien-Kautschuk, bevorzugt in einer Menge in einem Bereich von etwa 18 Gew.-% bis etwa 30 Gew.-%, besonders bevorzugt in einem Bereich von etwa 15 Gew.-% bis etwa 28 Gew.-% (Gew.% jeweils bezogen auf die Gesamtmenge der Haftvermittlungsschicht), dessen Dien ein 5-Ethyliden-2-Norbornen in einer Menge in einem Bereich von etwa 0,8 Gew.-% bis etwa 8 Gew.-%, bevorzugt in einer Menge in einem Bereich von etwa 1 Gew.-% bis etwa 7,5 Gew.-%, noch weiter bevorzugt in einer Menge in einem Bereich von etwa 1,4 Gew.-% bis etwa 7 Gew.-%, bezogen auf die Gesamtmenge der Monomere, die in einer Polymerisation zu dem Ethylen-Propylen-Dien-Kautschuk eingesetzt sind, ist. Ethylen-Propylen-Dien-Kautschuke, die in der Haftvermittlungsschicht einsetzbar sind, sind bereits weiter vorstehend in Hinblick auf ihre chemischen und physikalischen Eigenschaften im Zusammenhang mit der Ausbildung der mindestens einen Verbindungsschicht der Verbindungslage beschrieben.

Die Haftvermittlungsschicht kann weiterhin mindestens ein Additiv, ausgewählt aus einer Gruppe umfassend Tackifier, Antioxidantien, Katalysatoren, Co-Reagenzien und/oder Pigmente umfassen. Besonders bevorzugt sind Pigmente, insbesondere Farbpigmente. Diese können auch beispielsweise in einem Masterbatch mit dem mindestens ein Polymer eingesetzt werden. Wird das mindestens ein Polymer in Form eines Masterbatches eingesetzt, weist dieses bevorzugt mindestens 80 Gew.-%, bezogen auf die Gesamtmenge des Masterbatches, des Polymers auf, weiter bevorzugt mindestens 85 Gew.-% des mindestens einen Polymers. Ein Pigment, beispielsweise Ruß, ist bevorzugt in einer Menge in einem Bereich von etwa 0,5 Gew.-% bis etwa 20 Gew.-%, weiter bevorzugt in einer Menge von etwa 1 Gew.-% bis etwa 15 Gew.-%, von einem solchen Masterbatch des mindestens einen Polymers umfasst.

Als Tackifier können Kohlenwasserstoffharze eingesetzt werden, bevorzugt in einem Bereich von etwa 0,5 Gew.-% bis etwa 10 Gew.-%, weiter bevorzugt in einem Bereich von etwa 1 Gew.-% bis etwa 5 Gew.-%, jeweils bezogen auf die Gesamtmenge der Haftvermittlungsschicht. Auch kann ggf. der Haftvermittlungsschicht mindestens ein Antioxidationsmittel zugegeben sein. Vorzugsweise erfolgt die Vorsehung einer Mischung verschiedener Antioxidationsmittel. Das mindestens eine Antioxidationsmittel ist in einer Menge in einem Bereich von etwa 0,1 Gew.-% bis etwa 1 Gew.-%, weiter bevorzugt in einer Menge in einem Bereich von etwa 0,2 Gew.-% bis etwa 0,5 Gew.-%, jeweils bezogen auf die Gesamtmenge der Haftvermittlungsschicht, vorhanden. Als mögliche Antioxidationsmittel in der Haftvermittlungsschicht können insbesondere die weiter oben in Zusammenhang mit der Verbindunglage angeführten eingesetzt werden. Das Antioxidationsmittel ist bevorzugt Tris(2,4-di-tert-butylphenyl)phosphit oder ausgewählt aus einer Gruppe umfassend sterisch gehinderte Phenole, wie beispielsweise Pentaerythriol-Tetrakis (3-(3,5-di-ter-butyl-4-Hydroxiphenyl) Propionat). Als Katalysatoren werden bevorzugt organische Verbindungen mit Zink oder Zinn, zum Beispiel Zinkstearate oder Zinkoleate, alleine oder in Mischung, eingesetzt. Die Katalysatoren, einzeln oder in Mischung, sind vorzugsweise in einer Menge in einem Bereich von etwa 0,001 Gew.-% bis etwa 10 Gew.-%, bevorzugt in einem Bereich von etwa 0,005 Gew.-% bis etwa 4 Gew.-%, jeweils bezogen auf die Gesamtmenge der Haftvermittlungsschicht, umfasst.

Weiter bevorzugt kann die Haftvermittlungsschicht mindestens ein Co-Reagenz für das Katalysatormittel, ausgewählt aus einer Gruppe umfassend Triallylcyanurat, Triallylisocyanurat, Triallylphosphat und/oder Divinylbenzol, und besonders bevorzugt ein Triallylcyanurat und/oder ein Triallylisocyanurat umfassen. Das Co-Reagenz dient insbesondere der Verträglichmachung des eingesetzten Katalysatormittels der Schicht. Die Haftvermittlungsschicht umfasst das Co-Reagenz vorteilhafterweise in einer Menge in einem Bereich von etwa 0,01 Gew.-% bis etwa 5 Gew.-%, weiter bevorzugt in einer Menge in einem Bereich von etwa 0,2 Gew.-% bis etwa 5 Gew.-%, bevorzugt bis etwa 3 Gew.-%, bezogen auf die Gesamtmenge der Haftvermittlungsschicht. Besonders bevorzugt ist als Co-Reagenz eingesetzt ein solches aus einer Gruppe umfassend Triallylcyanurat, Triallylisocyanurat und/oder Triallylphosphat, besonders bevorzugt mindestens ein Triallylcyanurat, wobei die vorstehend genannten Co-Reagenzien in einer Menge in einem Bereich von etwa 0,02 Gew.-% bis etwa 2 Gew.-%, bevorzugt in einer Menge in einem Bereich von etwa 0,025 Gew.-% bis etwa 0,3 Gew.-%, jeweils bezogen auf die Gesamtmenge der Haftvermittlungsschicht, in der Schicht enthalten sein können.

Besonders bevorzugte Haftvermittlungsschichten weisen jeweils genau ein Polyolefin, genau einen Butylkautschuk oder genau ein Polyisobutylen, je nach eingesetztem Material für die mindestens eine Verbindungsschicht der mindestens einen Verbindungslage, und genau ein Elastomer auf. Wird die mindestens eine Verbindungsschicht aus Polyisobutylen gebildet, ist bevorzugt in der Haftvermittlungsschicht des Trägers, die dieser mindestens einen Verbindungsschicht zugewandt ist, so diese vorhanden ist, ebenfalls Polyisobutylen enthalten. Wird die mindestens eine Verbindungsschicht aus Butylkautschuk und Polyisobutylen gebildet, ist bevorzugt in der Haftvermittlungsschicht des Trägers, die dieser mindestens einen Verbindungsschicht zugewandt ist, so diese vorhanden ist, ebenfalls Butylkautschuk und Polyisobutylen enthalten. Wird die mindestens eine Verbindungsschicht aus Butylkautschuk gebildet, ist bevorzugt in der Haftvermittlungsschicht des Trägers, die dieser mindes-tens einen Verbindungsschicht zugewandt ist, so diese vorhanden ist, ebenfalls Butylkautschuk enthalten. Besonders bevorzugt ist dabei in der Haftvermittlungsschicht als genau ein Polyolefin ein Polyethylen oder ein Polypropylen, bevorzugt jeweils ein elektronenstrahlvernetzbares, eingesetzt. Als genau ein Butylkautschuk ist bevorzugt ein vernetzter, der auch als vorvernetzter angesprochen werden kann, Butylkautschuk eingesetzt. Als genau ein Elastomer in der Haftvermittlungsschicht ist vorteilhafterweise ein Ethylen-Propylen-Dien-Kautschuk, ganz besonders bevorzugt ein solcher mit 5-Ethyliden-2-Norbornen als Dien, eingesetzt. Eine besonders bevorzugte Haftvermittlungsschicht umfasst etwa 22 Gew.-% bis etwa 55 Gew.-% eines vernetzten Butylkautschuks, etwa 28 Gew.-% bis etwa 53 Gew.-% mindes-tens eines, bevorzugt elektronenstrahlvernetzbaren, Polyethylens oder Polypropylens und etwa 12 Gew.-% bis etwa 30 Gew.-% eines Ethylen-Propylen-Dien-Kautschuks mit 5-Ethyliden-2-Norbornen als Dien in einer Menge von etwa 1,5 Gew.-% bis etwa 5 Gew.-%, bezogen auf die Monomeren, die in einer Polymerisation zu dem Ethylen-Propylen-Dien-Kautschuk eingesetzt sind. Die vorstehend genannten Gewichtsprozentangaben mit Ausnahme des Diens beziehen sich auf die Gesamtmenge der Haftvermittlungsschicht.

Der Vorteil der Haftvermittlungsschicht ist, dass diese auch bei höheren Temperaturen, die zum Beispiel bei Durchströmung eines Rohres oder Pipeline mit warmen oder gar heißen Medien vorliegen, als solche wirken kann, so dass keine Ablösungserscheinungen im Lagenverbund aus Verbindungslage und Träger beziehungsweise Trägerlage auftreten, und zudem auch eine ausreichende mechanische Belastbarkeit vermittelt. Auch kann bei Anordnung des mindestens einen elektrisch leitfähigen Materials in der Haftvermittlungsschicht aufgrund deren Zusammensetzung, insbesondere deren chemische und/oder physikalische Eigenschaften, eine gute Einbettung des leitfähigen Materials erreicht werden, so dass dieses gut und gleichmäßig in der Haftvermittlungsschicht eingebettet ist. Die Haftvermittlungsschicht weist gute Schälwiderstände auf, die gemäß DIN EN 12068 in der Version 1999-03 bestimmbar sind, und zwar nicht nur bei erhöhten Temperaturen von 80°C oder größer, sondern auch bei Raumtemperatur, d. h. 20°C oder 23°C. Der vorgenannte Schälwiderstand bezieht sich auf die mechanische Schälprüfung gemäß DIN EN 12068 in der Version 1999-03, und zwar bezogen auf sowohl eine Aufbringung eines Korrosionsschutzbandes mit einer Haftvermittlungsschicht auf einer Werksumhüllung eines beispielsweise Rohres wie einer Gasleitung oder Pipeline, als auch bezogen auf eine Aufbringung auf eine nicht umhüllte Rohraußenfläche, beispielsweise eines Stahlrohres.

Die stark verbesserten Schälwiderstände zeigen die sehr gute mechanische Belastbarkeit, die mit der Haftvermittlungsschicht bei dem erfindungsgemäßen Korrosionsschutzband erzielt werden kann. Diese gilt auch bei höheren Temperaturen, insbesondere bei Temperaturen von 80°C und mehr. Zudem vermittelt die Haftvermittlungsschicht eine hervorragende Haftung zu dem Träger beziehungsweise der Trägerlage, auch in Form einer Streckbremse. Weiterhin ist vorteilhaft, dass aufgrund der spezifischen Zusammensetzung der Haftvermittlungsschicht bei Anordnung auf der Tragschicht zur Bildung des Trägers diese mitsamt der Tragschicht hergestellt werden kann durch ein Laminierverfahren oder ein Coextrusionsverfahren, bevorzugt ein Coextrusionsverfahren, und, so notwendig, anschließend gemeinsam mit der Tragschicht einer Elektronenstrahlvernetzung unterzogen werden kann. Eine durch eine Elektronenstrahlvernetzung nachteilige Depolymerisation des Butylkautschuks oder des Polyisobutylens wird durch den Einsatz der spezifischen Gewichtsanteile und des Zusatzes des mindestens einen Elastomers kompensiert. Hierdurch können letztendlich Träger mit einer Haftvermittlungsschicht auf einer, bevorzugt beiden gegenüberliegenden ersten und zweiten Oberflächen der Tragschicht erhalten werden, die eine verbesserte thermische und mechanische Belastbarkeit aufweisen.

Aufgrund dieser verbesserten Eigenschaften können mit einer Haftvermittlungsschicht versehene erfindungsgemäße Korrosionsschutzbänder je nach Ausgestaltung, insbesondere in Hinblick auf die Stärke der eingesetzten Trageschicht, an Rohren wie z. B. Gasleitungen oder Pipelines verlegt werden, ohne dass diese nach Versehung mit einem Korrosionsschutz durch das erfindungsgemäße Korrosionsschutzband in Sand gebettet werden müssen, wobei der Sand zusätzlich von außerhalb der betreffenden Baustelle herangeschafft werden muss. Stattdessen kann beispielsweise der Aushub an der Baustelle verwendet werden, ggf. nach Zerkleinerung durch geeignete Brecher zur Herstellung bestimmter Bodengüten, zur Bettung der beispielsweise Gasleitung oder Pipeline. Hierdurch können erhebliche Kosten eingespart werden, sei es in Hinblick auf den Transport und die Lagerung des Sandes, sei es in Hinblick auf verringerte Umweltschäden durch verminderte Bewegungen schweren Gerätes.

Bevorzugt kann die mindestens eine Korrosionsschutzlage und/oder die mindestens eine Verbindungslage mit einer Haftvermittlungsschicht verschmelzen. In einer Ausführungsform, in welcher der Träger mindestens eine, bevorzugt genau eine, Tragschicht und zwei Haftvermittlungsschichten, angeordnet auf den beiden gegenüberliegenden Oberflächen der Tragschicht, umfasst, und die eine Korrosionsschutzlage und Verbindungslage umfasst, wobei mindestens eine Haftvermittlungsschicht auf einer der beiden Oberflächen des Trägers freiliegend angeordnet ist, verschmilzt die Korrosionsschutzlage, die bei einer insbesondere spiralförmigen Umwicklung beispielsweise eines Rohrs oder einer Pipeline einer äußeren Oberfläche des Rohrs oder der Pipeline zugewendet ist, des Korrosionsschutzbandes mit der freiliegenden Haftvermittlungsschicht im Überlappungsbereich der Umwicklung. Nach Fertigstellung der Umwicklung des Rohres oder der Pipeline bildet sich nach einem gewissen Zeitraum, der auch temperaturabhängig ist, auf dem Rohr oder der Pipeline eine Umhüllung durch die Verschmelzungseigenschaft der Verbindungslage beziehungsweise Korrosionsschutzlage und der Haftvermittlungsschicht aus. Hierdurch bewirkt das erfindungsgemä-βe Korrosionsschutzband eine Wasserdichtigkeit und Sauerstoffdichtigkeit des umwickelten Rohres beziehungsweise der umwickelten Pipeline. Das Rohr oder die Pipeline ist vor Korrosion auch im Überlappungsbereich aufgrund der Selbstverschmelzung geschützt.

Bevorzugt ist in der mindestens einen Verbindungslage und/oder in der mindestens einen Korrosionsschutzlage und/oder in mindestens einer der mindestens zwei Trägerlagen mindestens ein elektrisch leitfähiges Material und/oder mindestens ein Kernmaterial anordenbar, bevorzugt eingebettet oder auf einer Oberfläche derselben angeordnet. Hierdurch wird eine weitergehende Funktionalisierung des erfindungsgemäßen Korrosionsschutzbandes erreicht. Kernmaterial im Sinne der vorliegenden Erfindung sind Vorrichtungen umfassend Sender-Empfänger-Systeme, Sensoren, Detektoren, Aufnehmer und/oder Fühler. Das elektrisch leitfähige Material oder das Kernmaterial ist in einer der genannten Lagen des erfindungsgemäßen Korrosionsschutzbandes beziehungsweise einer der Schichten derselben eingebettet, wenn das einzubettende Material innerhalb der Lage beziehungsweise Schicht angeordnet ist, mithin das einzubettende Material von der Lage beziehungsweise Schicht beziehungsweise dem Material der Lage beziehungsweise Schicht vollständig umgeben ist. Ausnahme sind die Längsränder und/oder die Endbereiche des erfindungsgemäßen Korrosionsschutzbandes zwischen den Längsrändern beziehungsweise die Stirnränder desselben, an denen das einzubettende elektrisch leitfähige Material oder das Kernmaterial offen liegen kann, also nicht von allen Seiten eingebettet ist. Beispiele hierfür sind die Zugabe von Leitruß oder intrinsisch leitfähigen Materialien in Pulverform zu dem Material der genannten Lage beziehungsweise Schichten derselben, aber auch die Vorsehung einer nicht perforierten Metallfolie als Tragschicht und insbesondere einzige Schicht in der Trägerlage, die dann auf einer Seite von der Verbindungslage und von der anderen Seite von einer Korrosionsschutzlage umgeben und damit eingebettet ist.

Ein elektrisch leitfähiges Material und/oder ein Kernmaterial ist auch dann eingebettet, wenn das Material der Schicht oder der Lage, insbesondere Butylkautschuk und/oder Polyisobutylen, insbesondere der Verbindungslage und/oder der Korrosionsschutzlage, durch in dem elektrisch leitfähigen Material und oder Kernmaterial angeordnete Ausnehmungen, Löcher bzw. Perforierungen durchragt und dadurch eine Integrierung des einzubettenden Materials mit der Schicht oder der Lage, insbesondere Butylkautschuk und/oder Polyisobutylen, erfolgt. Beispiele hierfür sind eine Ausbildung des Trägers der Trägerlage als Metallgitter oder als Metallgewebe oder Metallgewirke oder als eine perforierte Metallfolie, die dann eine einschichtige Trägerlage bilden. Ein vollständiges Umgeben des einzubettenden Materials mit dem Material der Schicht oder der Lage ist dabei nicht notwendig, kann aber erfolgen. Relevant ist eine Erzeugung einer hinreichenden Verbindung zwischen dem einzubettenden Material, insbesondere wenn dieses Ausnehmungen beziehungsweise Öffnungen aufweist, mit dem Material der Schicht oder der Lage. Dies erfolgt, um ein Delaminieren des einzubettenden Materials von der Schicht oder Lage, insbesondere Butylkautschuk und/oder Polyisobutylen, zu vermeiden.

Die Leitfähigkeit eines Materials oder Materialgemisches hängt von der Verfügbarkeit und Dichte beweglicher Ladungsträger ab. Diese können locker gebundene Elektronen wie beispielsweise in Metallen, aber auch Ionen oder delokalisierte Elektronen in organischen Molekülen sein, wie sie häufig durch mesomere Grenzstrukturen beschrieben werden. Stoffe mit frei beweglichen Ladungsträgern sind leitfähig. Der Vorteil der Vorsehung des leitfähigen Materials im erfindungsgemäßen Korrosionsschutzband besteht darin, dass Strom in dem beispielsweise mit dem erfindungsgemäßen Korrosionsschutzband umwickelten Rohr bis zu einem Punkt geleitet werden kann, der beschädigt ist, insbesondere auch in einem Überlappungsbereich, insbesondere bei spiralförmiger Umwicklung, der oftmals keinen Kontakt zu dem Rohr im Bereich zwischen einer unteren Korrosionsschutzlage der oberen Wicklung und einer oberen Korrosionsschutzlage oder Trägerlage der vorherigen Wicklung aufweist und daher für eine Spiralkorrosion trotz passiver Schutzvorrichtung anfällig ist. Eine Spiralkorrosion wird so sicher unterbunden. Bevorzugt ist in mindestens einer Lage, bevorzugt genau einer Lage, ein elektrisch leitfähiges Material eingebettet. Weiter bevorzugt ist in mindestens zwei Lagen ein elektrisch leitfähiges Material eingebettet. Das elektrisch leitfähige Material stellt eine zweite Barriere gegen Korrosion zur Verfügung.

Bevorzugt ist das elektrisch leitfähige Material ausgewählt aus einer Gruppe umfassend Metalle, leitfähige Polymere und/oder Kohlenstoff. Weiter bevorzugt ist das elektrisch leitfähige Material ausgewählt aus einer Gruppe umfassend Metalle und/oder leitfähige Polymere. Metalle sind Elektronenleiter, deren Elektronen im Leitungsband sind beweglich und transportieren elektrischen Strom hervorragend. Die elektrische Leitfähigkeit von Metallen liegt bevorzugt in einem Bereich zwischen etwa $0,5*10^6$ S/m und etwa $100*10^6$ S/m bei Raumtemperatur. Leitfähige Polymere, insbesondere intrinsisch leitfähige Polymere, sind Kunststoffe mit elektrischer Leitfähigkeit. Die Leitfähigkeit des Polymers wird durch konjugierte Doppelbindungen und/oder Dotierungen erreicht, die eine freie Beweglichkeit von Ladungsträgern im dotierten Zustand ermöglichen. Die elektrische Leitfähigkeit von leitfähigen Polymeren liegt bevorzugt in einem Bereich zwischen etwa $10^{-5}$ S/m und etwa $10^5$ S/m bei Raumtemperatur (20°C). Kohlenstoff kann in Form von Fasern, aber als Pulver oder als Partikel, auch plättchenförmig, in Form von Graphit oder Graphen eingesetzt werden, insbesondere als Zusatz zu den für die Tragschicht vorgesehenen Kunststoffmaterialien. Der Vorteil des Einsatzes von plättchenförmigen oder partikelförmigen elektrisch leitfähigen Materialien wie beispielsweise auch Kohlenstoff (Graphit oder Graphen) liegt in der Erzielbarkeit einer gleichmäßigen Verteilung in mindestens einer Lage des Korrosionsschutzbandes.

Bevorzugt ist das elektrisch leitfähige Material flächig oder teilflächig im Korrosionsschutzband angeordnet. Die Wahrscheinlichkeit, dass ein flächig oder teilflächig ausgebildetes leitfähiges Material sich bei einer Beschädigung im Bereich der Beschädigung beziehungsweise Schadstelle befindet, ist größer als bei einem unidirektionalen Material, beispielsweise einem auch einsetzbaren drahtförmigen Material wie einem Metalldraht. Das umhüllte Rohr ist mit einem flächigen oder flächig anordenbarem elektrisch leitfähigen Material vorteilhaft sicher vor Korrosion geschützt.

Bevorzugt liegt das elektrisch leitfähige Material in Form von Pulvern, Partikeln, Streifen, Drähten, Geweben, Netzen, Gelegen, Gewirken, Vliesen oder in Form von metallischen oder metallisierten, bevorzugt perforierten, Folien vor. So das elektrisch leitfähige Material in Form von Geweben, Netzen, Gelegen, Gewirken, Vliesen oder in Form von metallischen oder metallisierten, bevorzugt perforierten, Folien vorliegt, kann dieses die Trägerlage oder mindestens eine Schicht des Trägers einer Trägerlage, bevorzugt die Tragschicht, bilden, und bildet weiter bevorzugt allein die Trägerlage aus.

Besonders bevorzugt ist das elektrisch leitfähige Material ein Gewebe, noch weiter bevorzugt ein Hybrid-Gewebe, umfassend leitfähige und nicht-leitfähige Materialien. Dieses wird bevorzugt als Tragschicht der Trägerlage ausgebildet, und bildet weiter bevorzugt allein die Trägerlage aus. Bevorzugt ist ein erstes Material des Gewebes ausgewählt aus einer Gruppe umfassend mindestens ein Polyamid und/oder Polyesterfaserstoffe, und ist bevorzugt ein Polyester. Das erste Material ist bevorzugt garnartig ausgebildet. Bevorzugt ist ein zweites Material des Gewebes ausgewählt aus einer Gruppe umfassend leitfähige Metalle, insbesondere Edelstahl und/oder Kupfer und/oder Bronze. Es ist ebenfalls bevorzugt garnartig oder drahtartig ausgebildet. Bevorzugt liegt eine Stärke (Durchmesser) des ersten Materials in einem Bereich zwischen etwa 0,003 mm und etwa 0,30 mm. Bevorzugt weist das zweite Material die Form eines gewellten, garnartigen Drahtes auf. Bevorzugt ist das zweite Material bei einer drahtartigen Ausbildung oder einer Ausbildung als Draht ein Edelstahldraht und/oder ein Kupferdraht und/oder ein Bronzedraht. Wird Edelstahl als zweites Material eingesetzt, ist dieses bevorzugt ein Werkstoff 1.4301 gemäß DIN EN 10088-3. Bevorzugt liegt eine Stärke (Durchmesser) des zweiten Materials in einem Bereich zwischen etwa 0,003 mm und etwa 0,30 mm. Bevorzugt ermöglichen eine Wellform des Drahtes und/oder die Verwebungsart mit dem ersten, garnartigen Material es, dass sich das Gewebe an die Form des Rohres bei Umwicklung mit dem erfindungsgemäßen Korrosionsschutzband unter Zug anpasst. Bevorzugt ist das erste garnartige Material in der Längsrichtung und das zweite garnartige Material in der Querrichtung des erfindungsgemäßen Korrosionsschutzbandes angeordnet. Bevorzugt ist ein drittes Material vorgesehen. Das dritte Material kann identisch zu dem zweiten Material ausgebildet sein, und ist bevorzugt aus Edelstahl und/oder Kupfer und/oder Bronze. Bevorzugt liegt eine Stärke (Durchmesser) des dritten Materials in einem Bereich zwischen etwa 0,003 mm und etwa 0,30 mm. Bevorzugt ist das erste garnartige Material abwechselnd mit dem dritten garnartigen Material in der Längsrichtung und das zweite garnartige Material in der Querrichtung des erfindungsgemäßen Korrosionsschutzbandes angeordnet. In der Längsrichtung ist bevorzugt das erste garnartige Material und das dritte garnartige Material in einem Abstand von etwa 0,2 mm bis etwa 3 cm, bevorzugt zwischen etwa 0,3 mm und etwa 2,2 cm, angeordnet. Bevorzugt ist das erste Material ein erstes Kettgarn. Bevorzugt ist das zweite Material ein Schussgarn. Ein Kettgarn ist ein Faden, der in einer Weberei in einem Webstuhl in Längsrichtung aufgespannt ist. Im fertigen Gewebe liegen die Kettgarne parallel zur Webkante, während Schussgarne quer dazu verlaufen. Bevorzugt ist das dritte Material ein zweites Kettgarn. Das erste und das zweite Kettgarn sind bevorzugt abwechselnd im Gewebe angeordnet. Bevorzugt weist das Gewebe eine glatte Bindung auf, kann aber auch eine Köperbindung aufweisen. Eine Masche eines Gewebes, bevorzugt eines Hybrid-Gewebes, ist bevorzugt rechteckig oder quadratisch. Eine Masche ist eine Schlinge aus Draht, die beim Stricken oder Häkeln oder durch Verknüpfen entsteht. Bevorzugt liegt eine Größe einer rechteckigen, insbesondere quadratischen, Masche des Hybrid-Gewebes in einem Bereich zwischen etwa 0,3 mm x 0,3 mm und etwa 3,0 mm x 3,0 mm.

Bevorzugt weist ein geeignetes Gewebe einen Durchlässigkeitswert nach DIN 1 81 30 zwischen etwa $10^{-8}$ bis etwa $10^{-2}$ m/s, weiter bevorzugt zwischen etwa $10^{-6}$ bis etwa $10^{-3}$ m/s, besonders bevorzugt zwischen etwa $10^{-5}$ bis etwa $10^{-4}$ m/s auf. Weiter bevorzugt weist das Gewebe eine Maschenweite nach DIN ISO 9044:2017-11 zwischen etwa 0,005 mm bis etwa 50 mm, weiter bevorzugt zwischen etwa 0,01 mm bis etwa 10 mm, besonders bevorzugt zwischen etwa 0,05 mm bis etwa 5 mm, weiter bevorzugt in einem Bereich von etwa 0,2 mm bis etwa 3 mm, und noch weiter bevorzugt in einem Bereich von etwa 0,4 mm bis etwa 2mm, auf. Die Maschenweite ist der Abstand zwischen zwei benachbarten Kett- oder Schussgarnen.

Bevorzugt liegt das elektrisch leitfähige Material in Form von metallisierten Folien oder in Form einer Metallfolie vor. Die metallisierte Folie kann z.B. eine Rettungsfolie sein. Eine metallisiert Folie ist beispielsweise eine mit einem metallischen Material bedampfte Kunststofffolie. Eine Metallfolie besteht nur aus Metall. Die Folie, gleich in welcher Ausbildung, weist bevorzugt Ausnehmungen, beispielsweise in Form einer Perforation, auf, um eine Einbettung mit dem Material der Korrosionsschutzlage und/oder Verbindungslage und/oder einer angrenzenden Trägerlage zu gewährleisten. Bevorzugt ist die Folie perforiert. Bevorzugt ist die Perforierung in kreisrunder Form ausgebildet. Die Perforierung ist vorzugsweise vollflächig, kann aber auch teilflächig auf der Folie ausgebildet sein. In der Verbindungslage kann die Folie in das Material derselben eingebettet werden oder auf der ersten und/oder zweiten Oberfläche der Verbindungslage, innenliegend zwischen Träger- und Verbindungslage, angeordnet sein. Perforierte metallische oder metallisierte Folien als Tragschicht bilden bevorzugt einen einschichtigen Träger. Es können auch mit metallischen Partikeln gefüllte Folien vorgesehen sein, beispielsweise aus Polyethylen mit in diesem eingebrachten Leitruß, oder in Form von Mischungen aus Polyethylen mit Zusatz leitfähiger intrinsischer Polymere. Leitfähige Folien können coextrudiert ausgebildet sein zusammen mit Haftvermittlungsschichten auf beiden Oberflächen der als Tragschicht dienenden Folie und so eine Trägerlage bilden. Mindestens eine Haftvermittlungsschicht einer Trägerlage kann ebenfalls leitfähig ausgebildet sein, wie vorstehend für die Tragschicht beschrieben. Bei der Herstellung in Coextrusion mit der Tragschicht kann dann beispielsweise nur die Tragschicht, nur die mindestens eine oder bevorzugt bei Coextrusion mit zwei Haftvermittlungsschichten beide Haftvermittlungsschichten, oder sowohl die Tragschicht und mindestens eine oder beide Haftvermittlungsschichten elektrisch leitfähig ausgebildet sein.

Bevorzugt liegt das elektrisch leitfähige Material gefüllt in Polymeren vor. Als elektrisch leitfähiges Material kann Ruß (Carbon Black, auch Leitruß genannt), eine Form von Kohlenstoff, oder Pulver aus leitfähigen Metallen eingesetzt werden, wobei dieses bevorzugt als Batch mit einem Elastomer, bevorzugt Polyethylen, Polypropylen, Butylkautschuk, Polyisobutylen oder einem thermoplastischen Elastomer, eingesetzt wird. Es ist bevorzugt dem Material, aus welchem die Verbindungslage, die Korrosionsschutzlage oder die Trägerlage, dort insbesondere die Tragschicht, hergestellt werden, in Pulverform oder in Partikelform, auch blättchenförmig, (als Reinform oder Batch) zugesetzt. Der Zusatz von leitfähigen Materialien aus Metallpulvern, Ruß o.ä. entfällt oder kann entfallen, wenn intrinsisch leitfähige Polymere benutzt werden.

Bevorzugt stellt das elektrisch leitfähige Material eine Leitfähigkeit zwischen dem ersten und dem zweiten Längsrand des Korrosionsschutzbandes zur Verfügung. Der Strom kann von einem Längsrand zum anderen transportiert werden. Beispielsweise bildet nach Umwicklung eines Rohres oder einer Pipeline und Verschmelzung das erfindungsgemäße Korrosionsschutzband eine durchgehende Umhüllung auf dem Rohr oder der Pipeline aus. Ein elektrischer Strom kann außen durch die Umhüllung von einem Ende des Rohres zum anderen Ende übertragen werden, und zwar auch in den bei Umwicklung entstehenden Überlappungsbereichen, so dass bei Beschädigungen eine Spiralkorrosion sicher vermieden ist. Es wird vorteilhaft insbesondere eine Spiralkorrosion auch in Bereichen verhindert, die weiter von der Beschädigung entfernt sind.

Bevorzugt stellt das elektrisch leitfähige Material im Falle einer Beschädigung einer aus dem Korrosionsschutzband hergestellten Umhüllung an einem Rand der Beschädigung eine Leitfähigkeit zur Verfügung, so dass ein elektrischer Strom an die Schadstellen als Ort der Beschädigung geleitet werden kann. So können genügend Elektronen bereitgestellt werden, um einer Korrosion vorzubeugen. Der pH-Wert in der Umgebung der Schadstelle steigt ins Alkalische und schützt damit den defekten Bereich, auch, wenn sich in diesem die Umhüllung ablösen sollte.

Bevorzugt ist das elektrisch leitfähige Material im Wesentlichen nicht-elastisch in einer Querrichtung, definiert durch eine kürzeste Verbindung zwischen dem ersten und dem zweiten Längsrand des Korrosionsschutzbandes, in mindestens einer Lage des erfindungsgemäßen Korrosionsschutzbandes angeordnet. Das leitfähige Material erstreckt sich bevorzugt über die gesamte Breite des Materials zwischen dem ersten Längsrand und dem zweiten Längsrand. Der Vorteil ist, dass der Strom sicher von einem ersten Längsrand des Korrosionsschutzbandes zum zweiten Längsrand geleitet werden kann. In einer senkrecht zu der Querrichtung im Korrosionsschutzband verlaufenden Richtung von Anfang bis Ende desselben, also in Längsrichtung, ist das wie vorstehend definierte leitfähige Material bevorzugt im Wesentlichen elastisch ausgebildet oder aber derart, dass es durch den auf das Band bei Wicklung wirkende Zugkräfte nicht reißt. Dies kann beispielsweise durch eine Wellform des leitfähigen Materials, insbesondere eines Gewebes, oder durch die Vorsehung von Schlaufen in diesem, insbesondere bei Geweben und Gewirken, erreicht sein. Das leitfähige Material erstreckt sich bevorzugt über die gesamte Länge des Materials. Das Korrosionsschutzband selbst ist bevorzugt im Wesentlichen elastisch in einer Längsrichtung ausgebildet. Die Länge des Korrosionsschutzbands kann sich bei Zugbelastung vergrößern.

Ein zusätzlicher Vorteil der Leitfähigkeit des Korrosionsschutzbandes in Querrichtung und/oder Längsrichtung des Korrosionsschutzbandes, welche auch in Abwesenheit von Wasser gewährleistet ist, ist, dass ein Korrosionsschutz auch dann, wenn beispielsweise der Boden in einzelnen Abschnitten entlang einer Pipeline bereits getrocknet ist, ermöglicht ist. Ein Stromeintritt, auch wenn er an einem weiter entfernten Ort erfolgt, kann mit der Längsleitung im Band entlang einer Mittelachse eines Rohres, wie einer Pipeline, bis an die betroffene Stelle gelangen. Dies ist besonders vorteilhaft erzielbar bei einer vollständigen Umwicklung eines Rohres oder einer Pipeline über deren gesamte Länge oder zumindest eine gewisse Länger des Rohres oder der Pipeline. Selbst bei einer Umhüllung nur einer Schweißnaht zum Beispiel einer Pipeline mit dem erfindungsgemäßen Korrosionsschutzband könnte die beschädigte Stelle am oberen Rohrscheitelpunkt liegen und der Stromeintritt beispielsweise unten am Rohr erfolgen, wenn oben eine ausreichende Leitfähigkeit der Umgebung nicht gewährleistet ist. Die ergänzende Korrosionsschutzfunktion des erfindungsgemäßen Korrosionsschutzbandes durch das in diesem angeordnete mindestens eine elektrisch leitfähige Material ist auch in einem solchen Fall sichergestellt.

Bevorzugt sind die elektrisch leitfähigen Materialien in Form von Geweben, Netzen, Gelege, Gewirke, Vliese oder metallischen oder metallisierten, bevorzugt perforierten, Folien in der Querrichtung des Korrosionsschutzbandes und/oder in der Längsrichtung des Korrosionsschutzbandes eingebettet in der mindestens einen Verbindungslage und/oder der mindes-tens einen Korrosionsschutzlage und/oder auf mindestens einer Oberfläche der mindestens einen Verbindungslage und/oder der mindestens einen Korrosionsschutzlage angeordnet.

Bevorzugt ist das elektrisch leitfähige Material im Wesentlichen vollständig bis auf Bereiche an dem ersten und an dem dem ersten Längsrand gegenüberliegendem zweitem Längsrand des Korrosionsschutzbandes von dem Material der Verbindungslage, der Trägerlage, dort insbesondere der Trägerschicht und/oder der Haftvermittlungsschicht, und/oder der Korrosionsschutzlage umgeben. Bevorzugt ist das elektrisch leitfähige Material im Wesentlichen vollständig bis auf Bereiche am ersten und am zweiten Längsrand von dem Material der mindestens einen Verbindungslage und/oder der Korrosionsschutzlage umgeben. Auf diese Weise ist das leitfähige Material geschützt und wird nicht selbst korrodiert.

Bevorzugt ist in der mindestens einen Verbindungslage, in mindestens einer der mindestens zwei Trägerlagen und/oder in der mindestens einen Korrosionsschutzlage mindestens ein Kernmaterial angeordnet, bevorzugt eingebettet. Kernmaterialien umfassen Vorrichtungen, die ein automatisches und berührungsloses Identifizieren und Lokalisieren von Zielgrößen ermöglichen. Das Kernmaterial umfasst RFID-Systeme (RFID bedeutet radio frequency identification), eine Technologie für Sender-Empfänger-Systeme mit Radiowellen, Sensoren, Detektoren, Aufnehmer und/oder Fühler. Insbesondere die letztgenannten Vorrichtungen können chemische oder physikalische Eigenschaften qualitativ oder als Messgröße quantitativ erfassen. Diese von den Vorrichtungen erfassten Daten können in ein weiterverarbeitetes Signal umgeformt werden und zur weiteren Bearbeitung zur Verfügung gestellt werden, beispielsweise, um Defekte einer Pipeline, zum Beispiel einer Schweißnaht derselben, festzustellen und/oder zu lokalisieren.

Die vorliegende Erfindung betrifft weiterhin ein Verfahren zur Aufbringung des erfindungsgemäßen Korrosionsschutzbandes als Korrosionsschutz auf Bauteilen, insbesondere Rohren, Pipelines, rohrförmigen Gegenständen, Rohrleitungen und Rohrleitungsbauteilen , Tanks und Bestandteilen von Tanks, sowie auf sonstigen Anlagen und Einbauten durch Aufbringung des Korrosionsschutzbandes auf diese. Ein Rohr ist ein zylindrischer Hohlkörper, der vor allem dazu dient, Gase, Flüssigkeiten und/oder feste Körper weiterzuleiten. Ein Rohr kann z.B. ein Rohr einer Wasserleitung oder einer Fernheizung oder eine Pipeline, beispielsweise für Öl, Gase und/oder chemische Substanzen, sein. Bestandteile von Tanks sind zum Beispiel Tankböden, Metallbehälter, Armaturen und Tankanschlüsse.

Besonders bevorzugt werden bei dem Verfahren zur Aufbringung des erfindungsgemäßen Korrosionsschutzbandes Bauteile wie Rohre, Pipelines, rohrförmige Gegenstände, Rohrleitungen und Rohrleitungsbauteile sowie Tanks mit dem erfindungsgemäßen Korrosionsschutzband umwickelt. Das erfindungsgemäße Korrosionsschutzband macht eine zweite oder weitere Umwicklung oder Versehung von Bauteilen wie insbesondere Rohren, Pipelines, rohrförmigen Gegenständen, Rohrleitungen und Rohrleitungsbauteilen und von Tanks mit einem zusätzlichen Schutz, beispielsweise in Form einer Schutzbandes oder einer Schutzmatte, überflüssig. Durch das erfindungsgemäße Korrosionsschutzband kann von einer Versehung oder Umwicklung mit einem zusätzlichen, mechanischen Schutz abgesehen werden. Durch ein Umwickeln von Rohren bzw. Rohre umfassende Anlagen mit dem erfindungsgemäßen Korrosionsschutzband umfassend mindestens vier Lagen kann die aus dem Stand der Technik bekannte zumindest eine erste und zumindest eine zweite Umwicklung , die also zwei Arbeitsschritte benötigt, entfallen und lediglich eine einzige Umwicklung in einem Arbeitsschritt durchgeführt werden. Die zweite Umwicklung nach dem Stand der Technik erfolgt entweder nochmalig mit dem gleichen oder einem ähnlichen Korrosionsschutzband oder mit einem mechanischen Schutzband.

Die vorliegende Erfindung betrifft weiterhin ein Verfahren zur Herstellung des wie vorstehende in verschiedenen Ausführungsformen definierten erfindungsgemäßen Korrosionsschutzbandes mittels Ausübens von Druck auf mindestens ein erstes, mindestens zweilagiges Korrosionsschutzband und auf mindestens ein zweites, mindestens zweilagiges Korrosionsschutzband, wobei das erste und das zweite Korrosionsschutzband mindestens eine Trägerlage und mindestens eine Korrosionsschutzlage umfassen, derart, dass das erste oder das zweite Korrosionsschutzband mit dem jeweils anderen Korrosionsschutzband in Kontakt gebracht wird, so dass mindestens eine Korrosionsschutzlage des ersten oder des zweiten Korrosionsschutzbandes eine Verbindungslage, angeordnet zwischen den Trägerlagen des mindestens einen ersten und zweiten Korrosionsschutzbandes, und die mindestens eine weitere Korrosionsschutzlage des ersten oder zweiten Korrosionsschutzbandes eine äußere Lage des Korrosionsschutzbandes ausbildet. Bevorzugt erfolgt ein Kontakt zwischen der Verbindungslage des ersten oder zweiten Korrosionsschutzbandes und der Trägerlage des anderen Korrosionsschutzbandes unmittelbar. Der Kontakt zwischen der Verbindungslage des ersten oder zweiten Korrosionsschutzbandes und der Trägerlage des anderen Korrosionsschutzbandes erfolgt weiter bevorzugt ohne Primer oder eine oder mehrere zusätzliche Lagen. Bevorzugt wird zur Herstellung des erfindungsgemäßen Korrosionsschutzbands mindestens ein erstes, mindestens zweilagiges Korrosionsschutzband und mindestens ein zweites, mindestens zweilagiges Korrosionsschutzband verwendet. Das erste und das zweite Korrosionsschutzband umfassen mindestens eine Trägerlage und mindestens eine Korrosionsschutzlage. Zur Herstellung des erfindungsgemäßen Korrosionsschutzbandes werden das erste Korrosionsschutzband und das zweite Korrosionsschutzband in Kontakt gebracht derart, dass die Korrosionsschutzlage des ersten oder zweiten Korrosionsschutzbandes in Kontakt mit der Trägerlage des jeweils anderen Korrosionsschutzbandes gebracht wird. Durch das in Kontakt bringen des ersten und des zweiten Korrosionsschutzbandes oder nachfolgend des in Kontakt bringen wird durch Ausüben von Druck eine Verbindungslage aus der jeweiligen Korrosionsschutzlage des ersten und des zweiten Korrosionsschutzbandes gebildet, die zwischen der Trägerlage des ersten Korrosionsschutzbandes und der Trägerlage des zweiten Korrosionsschutzbandes angeordnet ist. Das Inkontaktbringen des ersten und des zweiten Korrosionsschutzbandes mit mindestens einer Trägerlage und mindestens einer Korrosionsschutzlage kann vor oder gleichzeitig mit dem Ausüben von Druck auf das erste und zweite Korrosionsschutzband erfolgen. Gleichzeitig kann dies beispielsweise bei getrennter Zufuhr des ersten und des zweiten Korrosionsschutzbandes in einen Walzspalt in einem Kalander erfolgen. Die weitere Korrosionsschutzlage dient im solchermaßen hergestellten Produkt als Korrosionsschutzlage des erfindungsgemäßen Korrosionsschutzbandes. Im Sinne der vorliegenden Erfindung sind Korrosionsschutzbänder bandförmig, mattenförmig oder sonst wie flächig ausgestaltet. Auch fallen unter die vorliegende Erfindung auch Bänder, Matten oder Bahnen, die gegebenenfalls in eine gewünschte Breite des Korrosionsschutzbandes zugeschnitten werden können. Bevorzugt werden Bahnen für die Herstellung der Korrosionsschutzbänder genutzt, bevorzugt mit einer Breite bis zu 6 m, weiter bevorzugt mit einer Breite bis zu 3,5 m.

Die Verbindungslage dient dazu, die Trägerlagen miteinander zu verbinden, aber auch, um das Korrosionsschutzband einfach funktionalisieren zu können, so dass das Korrosionsschutzband ergänzende Eigenschaften aufweist. Die Verbindungslage kann wahlweise eine elektrische Leitfähigkeit zur Verfügung stellen. Dies kann beispielsweise auch dadurch erfolgen, das vor Inkontaktbringen des ersten und des zweiten Korrosionsschutzbandes nach dem erfindungsgemäßen Verfahren ein elektrisch leitfähiges Material auf einer Oberfläche der mindestens einen Korrosionsschutzlage des ersten Korrosionsschutzbandes aufgebracht wird, die einer Oberfläche der mindestens einen Korrosionsschutzlage des zweiten Korrosionsschutzbandes oder einer Oberfläche der mindestens einen Trägerlage gegenüberliegend angeordnet wird. Das elektrisch leitfähige Material kann dabei beispielsweise ein Leitrußpulver oder ein Metallpulver oder eine metallische oder metallisierte Folie, bevorzugt perforiert, sein. Die Leitfähigkeit kann über die vollständige Länge des Bandes oder zumindest abschnittsweise zur Verfügung gestellt sein. Bevorzugt ist in mindestens einer Verbindungslage ein elektrisch leitfähiges Material eingebettet. Bevorzugt ausgewählte elektrisch leitfähige Materialien sind bereits im Zusammenhang mit der Ausbildung der elektrischen Leitfähigkeit der Verbindungslage und/oder der Korrosionsschutzlage beschrieben. Die in der Verbindungslage und/oder Korrosionsschutzlage wahlweise eingebetteten Kernmaterialien sind ebenfalls vorstehend im Zusammenhang mit der Ausbildung der elektrischen Leitfähigkeit bereits beschrieben. Weiterhin dient die Verbindungslage dazu, auf einfache Weise unterschiedliche Materialeigenschaften der verschiedenen Lagen des Korrosionsschutzbandes einzustellen. Die Verbindungslage kann beispielsweise von der Korrosionsschutzlage des mindestens vierlagigen erfindungsgemäßen Korrosionsschutzbandes abweichende Materialeigenschaften aufweisen. Dies kann einfach in dem erfindungsgemäßen Verfahren dadurch erzielt werden, dass die Korrosionsschutzlagen des ersten und des zweiten Korrosionsschutzbandes unterschiedlich in ihren Eigenschaften eingestellt sind. Bevorzugt können so die Viskosität und die Festigkeit der Verbindungslage und der Korrosionsschutzlage im erfindungsgemäßen mindestens vierlagigen Korrosionsschutzband unterschiedlich eingestellt werden. So weist bevorzugt die Verbindungslage eine niedrigere- Viskosität und/oder eine geringere Festigkeit als die Korrosionsschutzlage auf.

Bevorzugt werden das mindestens eine erste, mindestens zweilagige Korrosionsschutzband und das mindestens eine zweite, mindestens zweilagige Korrosionsschutzband durch ein Pressverfahren zusammen gepresst. Im Sinne der vorliegenden Erfindung werden unter Pressverfahren Verfahren verstanden, die unter Wirkung äußerer Kräfte ein zu verpressendes Material plastisch verformen, wobei eine gezielte Veränderung des zu verpressenden Materials in seiner äußeren Form hervorgerufen wird. Bevorzugt werden das mindestens eine erste und das mindestens eine zweite Korrosionsschutzband zusammen verpresst. Vorzugsweise wird in der vorliegenden Erfindung ein Pressverfahren verwendet, das im Wesentlichen eine äußere Kraft auf eine Querschnittsfläche eines Korrosionsschutzbandes ausübt. Die Querschnittsfläche eines Korrosionsschutzbandes ist definiert als die Fläche, die von der Breite und der Stärke des Korrosionsschutzbandes aufgespannt wird. Bevorzugt wird die von au-ßen wirkende Kraft mittels mindestens einer Walze auf ein Korrosionsschutzband übertragen. Für die über die Walze übertragende Kraft an ein Korrosionsschutzband wird als Synonym im Rahmen der vorliegenden Erfindung der Begriff Druck verwendet. Weiter bevorzugt wird der Druck mittels mindestens zwei Walzen, bevorzugt einer Oberwalze und einer Unterwalze, die jeweils in Kontakt mit dem mindestens ersten Korrosionsschutzbandes und mit dem mindestens zweiten Korrosionsschutzbandes stehen, übertragen. Die Oberwalze und die Unterwalze definieren einen Walzspalt, der einem Bereich, der zwischen der Oberwalze und der Unterwalze gebildet wird, zugeordnet ist. Das mindestens eine erste und das mindestens eine zweite Korrosionsschutzband laufen in den Walzspalt ein und sind nach dem Durchlaufen durch den Walzspalt zusammen verpresst. Das aus dem Walzspalt auslaufende zusammengepresste Korrosionsschutzband ist ein erfindungsgemäßes, mindestens vierlagiges Korrosionsschutzband. Weiter bevorzugt wird der Druck mittels einer, zwei, drei oder mehreren Walzen übertragen, wobei die Walzen als eine Arbeitswalze oder eine Stützwalze für die Arbeitswalze wirken können. Auch ist ein System mehrerer aufeinander liegender Walzen als Pressverfahren denkbar. Es ist weiterhin denkbar, dass das mindestens eine erste Korrosionsschutzband und das mindestens eine zweite Korrosionsschutzband, die in den Walzspalt einlaufen, oder das nach dem Durchlaufen eines ersten Walzspaltes gebildete erfindungsgemäße mindestens vierlagige Korrosionsschutzband zwei, drei oder mehrere Walzspalte durchlaufen. Es ist weiterhin denkbar, dass ein Walzsystem in Form eines Kalanderprozesses verwendet wird. Bevorzugt ist im Kalanderprozess eine Walze mit Gummibeschichtung und eine Stahlwalze als Stützwalze verwendet. Bevorzugt weist der Walzspalt einen Spalt von 0,5 mm bis 1,5 mm auf, weiter bevorzugt von 0,7 mm bis 1,3 mm. Bevorzugt umfasst das Pressverfahren eine Reckung des mindestens einen ersten Korrosionsschutzbandes, des mindestens einen zweiten Korrosionsschutzbandes und/oder des durch diese gebildeten erfindungsgemäßen Korrosionsschutzbandes. Im Sinne der vorliegenden Erfindung umfasst die Reckung eine von außen wirkende Kraft in Längsrichtung eines Korrosionsschutzbandes. Bevorzugt ist die bei der Reckung von außen wirkende Kraft eine Zugkraft, die ein Korrosionsschutzband in Längsrichtung zieht. Eine Reckung kann insbesondere nachfolgend der Druckausübung bei dem dann gebildeten erfindungsgemäßen Korrosionsschutzband erfolgen, beispielsweise in Zusammenhang mit der Aufwicklung des das erfindungsgemäße Korrosionsschutzband bildenden bahnförmigen Produktes.

Die Stärke beziehungsweise Dicke des erfindungsgemäßem Korrosionsschutzbandes kann durch ein gezieltes Einstellen des Walzspalts, des Drucks der Walzen, der Reckung oder weitere das Pressverfahren oder das Aufwicklung betreffende Prozessgrößen variiert werden. Auch ist die Stärke der Verbindungslage oder die Ausgestaltung der Verbindungslage betreffend elektrisch leitfähige Materialien und/oder Kernmaterialien durch ein gezieltes Einstellen des Walzspalts, den Druck der Walzen, der Reckung oder weitere das Pressverfahren oder die Aufwicklung betreffende Prozessgrößen variierbar.

In einer besonders bevorzugten Ausführungsform zur Herstellung des erfindungsgemäßen Korrosionsschutzbandes umfasst das erstes Korrosionsschutzband zwei Lagen und das zweite Korrosionsschutzband drei Lagen. Das erste Korrosionsschutzband umfasst dabei eine Trägerlage und eine Korrosionsschutzlage. Das zweite Korrosionsschutzband umfasst dabei eine Trägerlage und zwei Korrosionsschutzlagen derart, dass die Trägerlage zwischen der ersten und der zweiten Korrosionsschutzlage angeordnet ist. Zur Herstellung des erfindungsgemäßen Korrosionsschutzbandes werden das erste Korrosionsschutzband und das zweite Korrosionsschutzband in Kontakt gebracht derart, dass die Korrosionsschutzlage des ersten Korrosionsschutzbandes in Kontakt mit einer der beiden Korrosionsschutzlagen des zweiten Korrosionsschutzbandes gebracht wird. Durch das in Kontakt bringen des ersten und des zweiten Korrosionsschutzbandes bilden die zwei Korrosionsschutzlagen jeweils des ersten und des zweiten Korrosionsschutzbandes nach Ausüben von Druck eine Verbindungslage, die zwischen der Trägerlage des ersten Korrosionsschutzbandes und der Trägerlage des zweiten Korrosionsschutzbandes angeordnet ist. Hierdurch wird gleichwohl ein vierlagiges erfindungsgemäßes Korrosionsschutzband erhalten, denn durch die Ausübung von Druck bilden die beiden in Kontakt kommenden Korrosionsschutzlagen des ersten und des zweiten Korrosionsschutzbandes eine einlagige Verbindungsschicht. Dies wird unterstützt durch eine Erwärmung bei Ausübung des Druckes, beispielsweise durch Einsatz temperierbarer Walzen, was grundsätzlich in dem erfindungsgemäßen Verfahren bevorzugt ist. Bevorzugt werden Temperaturen in einem Bereich von etwa 25°C bis etwa 170°C, bevorzugt in einem Bereich von etwa 30 °C bis etwa 140°C, eingesetzt.

Bevorzugt wird die Trägerlage des mindestens einen ersten und/oder des mindestens einen zweiten Korrosionsschutzbandes aus einem mindestens einschichtigen Träger gebildet, wobei mindestens eine Schicht des Trägers als Tragschicht ausgebildet wird, wobei die Tragschicht aus mindestens einem Trägermaterial gebildet ist umfassend Polyethylen, Polypropylen, Polyvinylchlorid, thermoplastische Elastomere und/oder Metalle, bevorzugt solche wie weiter oben beschrieben. Bevorzugt weist die mindestens eine Korrosionsschutzlage des mindestens einen ersten und/oder des mindestens einen zweiten Korrosionsschutzbandes ein Material umfassend mindestens einen Butylkautschuk und/oder mindestens ein Polyisobutylen, bevorzugt solche wie weiter oben beschrieben, auf. Bevorzugt werden das mindes-tens eine erste, mindestens zweilagige Korrosionsschutzband und das mindestens eine zweite, mindestens zweilagige Korrosionsschutzband durch ein wie vorstehend erläutertes Pressverfahren zusammengepresst.

In einer weiteren bevorzugten Ausführungsform zur Herstellung des erfindungsgemäßen Korrosionsschutzbandes umfasst das erstes Korrosionsschutzband drei Lagen und das zweite Korrosionsschutzband drei Lagen. Das erste und das zweite Korrosionsschutzband umfassen jeweils eine Trägerlage und zwei Korrosionsschutzlagen, wobei die Trägerlage zwischen der ersten und der zweiten Korrosionsschutzlage des jeweiligen Korrosionsschutzbandes angeordnet ist. Zur Herstellung des erfindungsgemäßen Korrosionsschutzbandes werden das erste Korrosionsschutzband und das zweite Korrosionsschutzband in Kontakt gebracht derart, dass eine der beiden Korrosionsschutzlagen des ersten Korrosionsschutzbandes in Kontakt mit einer der beiden Korrosionsschutzlagen des zweiten Korrosionsschutzbandes gebracht wird. Durch das in Kontakt bringen des ersten und des zweiten Korrosionsschutzbandes bilden die zwei Korrosionsschutzlagen jeweils des ersten und des zweiten Korrosionsschutzbandes nach Ausüben von Druck eine Verbindungslage, die zwischen der Trägerlage des ersten Korrosionsschutzbandes und der Trägerlage des zweiten Korrosionsschutzbandes angeordnet ist. Bevorzugt werden das erste dreilagige Korrosionsschutzband und das zweite dreilagige Korrosionsschutzband durch ein bereits vorstehend erläutertes Pressverfahren zusammengepresst. Hierdurch wird ein fünflagiges erfindungsgemäßes Korrosionsschutzband erhalten, denn durch die Ausübung von Druck bilden die beiden in Kontakt kommenden Korrosionsschutzlagen des ersten und des zweiten Korrosionsschutzbandes eine einlagige Verbindungschicht. Auch hier kann die Bildung der Verbindungslage durch Erwärmung unterstützt werden, wie vorstehend beschrieben.

Die vorliegende Erfindung betrifft weiterhin die Verwendung des erfindungsgemäßen Korrosionsschutzbandes für den Schutz von Bauteilen, insbesondere von Rohren, Pipelines, rohrförmigen Gegenständen, Rohrleitungen und Rohrleitungsbauteilen sowie von Tanks und Bestandteilen von Tanks sowie sonstigen Anlagen und Einbauten, vor Korrosion. Besonders bevorzugt ist die Verwendung des Korrosionsschutzbandes in dem Verfahren zur Aufbringung des erfindungsgemäßen Korrosionsschutzbandes wie vorstehend beschrieben.

Die vorliegende Erfindung betrifft auch die Verwendung des erfindungsgemäßen Korrosionsschutzbandes zur Lokalisierung mindestens eines Defektes in einer Rohrleitung oder Pipeline im Bereich einer Schweißnaht, wobei die Verbindungslage mindestens ein in der mindestens einen Verbindungslage eingebettetes leitfähiges Material und/oder Kernmaterial umfasst, das zumindest im Bereich einer Schweißnaht einer Rohrleitung oder Pipeline anordbar ist. Bevorzugt umfasst das Korrosionsschutzband zur Lokalisierung mindestens eines Defektes in einer Rohrleitung oder Pipeline im Bereich einer Schweißnaht mindestens eine Korrosionsschutzlage umfassend ein Material ausgewählt aus einer Gruppe umfassend mindestens einen Butylkautschuk und/oder mindestens ein Polyisobutylen. Weiter bevorzugt umfasst die Korrosionsschutzlage mindestens ein in der mindestens einen Korrosionsschutzlage eingebettetes leitfähiges Material und/oder Kernmaterial. Bevorzugt umfasst das Korrosionsschutzband zur Lokalisierung mindestens eines Defektes in einer Rohrleitung oder Pipeline im Bereich einer Schweißnaht eine Tragschicht mindestens einer Trägerlage, die aus mindestens einem Trägermaterial gebildet ist ausgewählt aus einer Gruppe umfassend Polyethylen, Polypropylen, Polyvinylchlorid, thermoplastische Elastomere und/oder Metalle. Weiter bevorzugt umfasst das Korrosionsschutzband zur Lokalisierung mindestens eines Defektes in einer Rohrleitung oder Pipeline im Bereich einer Schweißnaht Tragschichten in den mindestens zwei Trägerlagen, die aus mindestens einem Trägermaterial gebildet sind ausgewählt aus einer Gruppe umfassend Polyethylen, Polypropylen, Polyvinylchlorid, thermoplastische Elastomere und/oder Metalle. Besonders bevorzugt umfasst das Korrosionsschutzband zur Lokalisierung mindestens eines Defektes in einer Rohrleitung oder Pipeline im Bereich einer Schweißnaht zwei identische Trägerlagen. Erfindungsgemäß ist auf mindestens einer Oberfläche der Tragschicht mindestens einer der Trägerlagen eine Haftvermittlungsschicht angeordnet. Bevorzugt sind auf mindestens einer Oberfläche der Tragschichten der Trägerlagen Haftvermittlungsschichten angeordnet.

Die vorliegende Erfindung wird anhand der nachfolgenden Beispiele näher erläutert.

Zur Herstellung eines Korrosionsschutzbandes wurde ein erstes, zweilagiges Korrosionsschutzband und ein zweites, dreilagiges Korrosionsschutzband eingesetzt. Das erste, zweilagige Korrosionsschutzband war mit einer dreischichtigen Trägerlage ausgebildet, wobei die Trägerlage eine Tragschicht mit auf beiden gegenüberliegenden Oberflächen derselben aufgetragenen Haftvermittlungsschichten ausgebildet war. Die Tragschicht der Trägerlage bestand aus Polyethylen. Die Haftvermittlungsschicht bestand aus 50 Gew.-% eines zumindest teilweise vorvernetzten Butylkautschuks mit den in der obigen Beschreibung angegebenen Eigenschaften, 33,33 Gew.-% eines elektronenstrahlvernetzbaren Polyethylens und 16,67 Gew.-% eines Ethylen-Propylen-Dien-Kautschuks mit 5-Ethyliden-2-Norbornen als Dien, wobei die Mengen bezogen sind auf die Gesamtmenge der Haftvermittlungsschicht, und die Bestandteile Eigenschaften aufweisen, wie diese in der obigen Beschreibung angegeben sind. In einem Koextrusionsverfahren wurde die Trägerlage mit einer Tragschicht und auf den beiden Oberflächen der Tragschicht angeordnete Haftvermittlungsschichten hergestellt. Die Tragschicht wies eine Stärke von 0,5 mm auf, die Haftvermittlungsschichten jeweils eine Stärke von 40 μm.

Die zweite Lage des ersten, zweilagigen Korrosionsschutzbandes war als Korrosionsschutzlage ausgebildet, die aus 30 Gew.-% eines Polyisobutylens, 10 Gew.-% eines Butylkautschuks, 60 Gew.-% eines pulverförmigen, mineralischen Füllmateriales, jeweils bezogen auf die Gesamtmenge der Korrosionsschutzlage, hergestellt wurde. Die Bestandeile der Korrosionsschutzlage weisen Eigenschaften auf, wie diese in der obigen Beschreibung angegeben sind. Die Korrosionsschutzlage war auf einer Oberfläche der Trägerlage angeordnet, angrenzend an eine der beiden Haftvermittlungsschichten.

Das zweite, dreilagige Korrosionsschutzband war mit einer dreischichtigen Trägerlage ausgebildet, wobei die Trägerlage eine Tragschicht mit auf beiden Oberflächen derselben aufgetragenen Haftvermittlungsschicht ausgebildet war. Die Tragschicht der Trägerlage bestand aus Polyethylen. Die Haftvermittlungsschicht bestand aus 50 Gew.-% eines zumindest teilweise vorvernetzten Butylkautschuks mit den in der obigen Beschreibung angegebenen Eigenschaften, 33,33 Gew.-% eines elektronenstrahlvernetzbaren Polyethylens und 16,67 Gew.-% eines Ethylen-Propylen-Dien-Kautschuks mit 5-Ethyliden-2-Norbornen als Dien, wobei die Mengen bezogen sind auf die Gesamtmenge der Haftvermittlungsschicht, und die Bestandteile Eigenschaften aufweisen, wie diese in der obigen Beschreibung angegeben sind. In einem Koextrusionsverfahren wurde die Trägerlage mit einer Tragschicht und auf den beiden Oberflächen der Tragschicht angeordnete Haftvermittlungsschichten hergestellt. Die Tragschicht wies eine Stärke von 0,5 mm auf, die Haftvermittlungsschichten jeweils eine Stärke von 40 μm. Die zweite und die dritte Lage des zweiten dreilagigen Korrosionsschutzbandes waren als Korrosionsschutzlagen ausgebildet. Diese zwei Korrosionsschutzlagen waren jeweils auf einer Oberfläche der Trägerlage derart angeordnet, dass die Trägerlage zwischen den zwei Korrosionsschutzlagen angeordnet war. Die zwei Korrosionsschutzlagen bestanden aus 30 Gew.-% eines Polyisobutylens, 10 Gew.-% eines Butylkautschuks, 60 Gew.-% eines pulverförmigen, mineralischen Füllmateriales, jeweils bezogen auf die Gesamtmenge der Korrosionsschutzlage. Die Bestandeile der Korrosionsschutzlage weisen Eigenschaften auf, wie diese in der obigen Beschreibung angegeben sind. Eine der beiden Korrosionsschutzlagen umfasste weiterhin eine flächige, kreisrund perforierte metallisierte Rettungsfolie, die in einer der beiden Korrosionsschutzlagen eingebettet wurde.

Das erste zweilagige und das zweite dreilagige wurden in einem Kalanderprozess mit einer gummibeschichteten Arbeitswalze und einer Gegenwalze aus Stahl verpresst. Der Walzspalt war dabei auf 0,9 mm eingestellt. Das auslaufende verpresste Korrosionsschutzband wurde weiterhin einer Reckung unterzogen. Die zwei einlaufenden Korrosionsschutzbänder wurden zum Verpressen derart aufeinander gelegt, dass die Trägerlage des ersten zweilagigen Korrosionsschutzbandes in Kontakt mit der Korrosionsschutzlage mit dem eingebetteten elektrisch leitfähigen Material des zweiten Korrosionsschutzbandes lag. Das verpresste auslaufende Korrosionsschutzband bildete zwischen der Trägerlage des ersten Bandes und der Trägerlage des zweiten Bandes eine Verbindungslage mit eingebettetem elektrisch leitfähigem Material in Form einer metallisierten, perforierten Rettungsfolie.

Ein alternatives, zweites Beispiel einer Herstellung eines Korrosionsschutzbandes umfasst die zur Verfügung Stellung eines ersten dreilagigen Korrosionsschutzband und eines zweiten, dreilagigen Korrosionsschutzbandes. Das erste, dreilagige Korrosionsschutzband war mit einer dreischichtigen Trägerlage ausgebildet, die wie die Trägerlage des ersten Korrosionsschutzbandes aus dem obigen ersten Beispiel ausgebildet war. Die zweite Lage und die dritte des ersten dreilagigen Korrosionsschutzbandes waren als Korrosionsschutzlage ausgebildet, die wie die Korrosionsschutzlage des ersten Korrosionsschutzbandes aus dem obigen ersten Beispiel ausgebildet war. Die beiden Korrosionsschutzlagen waren jeweils auf einer Oberfläche der Trägerlage angeordnet, angrenzend an eine der beiden Haftvermittlungsschichten, derart, dass die Trägerlage zwischen den beiden Korrosionsschutzlagen angeordnet war.

Das zweite, dreilagige Korrosionsschutzband war mit einer dreischichtigen Trägerlage ausgebildet, wobei die Trägerlage wie die Trägerlage des ersten Korrosionsschutzbandes des obigen ersten Beispiels ausgebildet war. Die zweite und die dritte Lage des zweiten, dreilagigen Korrosionsschutzbandes waren als Korrosionsschutzlagen ausgebildet. Die zwei Korrosionsschutzlagen waren jeweils an einer Oberfläche der Trägerlage derart angeordnet, dass die Trägerlage zwischen den zwei Korrosionsschutzlagen angeordnet war. Die zwei Korrosionsschutzlagen bestanden aus 30 Gew.-% eines Polyisobutylens, 10 Gew.-% eines Butylkautschuks, 60 Gew.-% eines pulverförmigen, mineralischen Füllmateriales, jeweils bezogen auf die Gesamtmenge der Korrosionsschutzlage. Die Bestandeile der Korrosionsschutzlage weisen Eigenschaften auf, wie diese in der obigen Beschreibung angegeben sind. Die zweite Lage der beiden Korrosionsschutzlagen umfasste weiterhin ein RFID-System, wobei RFID-Transponder abschnittsweise in der zweiten Korrosionsschutzlage derart eingebettet wurden, dass mindestens ein RFID-Transponder auf der gesamten Länge des Korrosionsschutzbandes in 15 cm Abschnitten verfügbar gewesen ist.

Das erste dreilagige und das zweite dreilagige Band wurden in einem Kalanderprozess mit einer gummibeschichteten Arbeitswalze und einer Gegenwalze aus Stahl verpresst. Der Walzspalt war dabei auf 1,0 mm eingestellt. Das aus dem Walzspalt auslaufende verpresste Korrosionsschutzband wurde weiterhin einer Reckung unterzogen. Die zwei in den Walzspalt einlaufenden Korrosionsschutzbänder wurden zum Verpressen derart aufeinander gelegt, dass eine Korrosionsschutzlage des ersten dreilagigen Korrosionsschutzbandes in Kontakt mit der Korrosionsschutzlage mit dem eingebetteten elektrisch leitfähigen Material des zweiten dreilagigen Korrosionsschutzbandes kam. Das verpresste auslaufende, fünflagige Korrosionsschutzband bildete somit zwischen der Trägerlage des ersten Bandes und der Trägerlage des zweiten Bandes eine Verbindungslage, gebildet aus zwei Korrosionsschutzlagen, wobei in der Verbindungslage der RFID-Transponder eingebettet ist.

Ein alternatives, drittes Beispiel einer Herstellung eines Korrosionsschutzbandes umfasst die zur Verfügung Stellung eines ersten, dreilagigen Korrosionsschutzbandes und eines zweiten, zweilagigen Korrosionsschutzbandes. Das erste, dreilagige Korrosionsschutzband war mit einer dreischichtigen Trägerlage ausgebildet, die wie die Trägerlage des ersten Korrosionsschutzbandes aus dem obigen ersten Beispiel ausgebildet war. Die zweite Lage und die dritte des ersten dreilagigen Korrosionsschutzbandes waren als Korrosionsschutzlagen ausgebildet, die wie die Korrosionsschutzlage des ersten Korrosionsschutzbandes aus dem obigen ersten Beispiel ausgebildet war. Die beiden Korrosionsschutzlagen waren jeweils auf einer Oberfläche der Trägerlage angeordnet, angrenzend an eine der beiden Haftvermittlungsschichten, derart, dass die Trägerlage zwischen den beiden Korrosionsschutzlagen angeordnet war.

Das zweite, zweilagige Korrosionsschutzband war mit einer einschichtigen Trägerlage ausgebildet, wobei die Trägerlage als einzige Schicht eine Tragschicht aufwies. Die Tragschicht war in Gitterform ausgebildet, wobei das Trägermaterial aus Edelstahldraht und Kupferdraht bestand und damit elektrisch leitfähig war. Die Tragschicht wies eine Stärke von 0,7 mm auf.

Die zweite Lage des ersten, zweilagigen Korrosionsschutzbandes war als Korrosionsschutzlage ausgebildet, die aus 30 Gew.-% eines Polyisobutylens, 10 Gew.-% eines Butylkautschuks, 60 Gew.-% eines pulverförmigen, mineralischen Füllmateriales, jeweils bezogen auf die Gesamtmenge der Korrosionsschutzlage, hergestellt wurde. Die Bestandeile der Korrosionsschutzlage weisen Eigenschaften auf, wie diese in der obigen Beschreibung angegeben sind.

Die Korrosionsschutzlage war auf einer Oberfläche der Trägerlage angeordnet, angrenzend an die Haftvermittlungsschicht.

Das erste, dreilagige und das zweite, zweilagige Band wurden in einem Kalanderprozess mit einer gummibeschichteten Arbeitswalze und einer Gegenwalze aus Stahl verpresst. Der Walzspalt war dabei auf 1,0 mm eingestellt. Die zwei in den Walzspalt einlaufenden Korrosionsschutzbänder wurden zum Verpressen derart aufeinander gelegt, dass eine Korrosionsschutzlage des ersten dreilagigen Korrosionsschutzbandes in Kontakt mit der Trägerlage aus Metallgitter des zweiten Korrosionsschutzbandes kam. Das verpresste auslaufende fünflagige Korrosionsschutzband bildete somit zwischen der Trägerlage des ersten Bandes und der elektrisch leitfähigen Trägerlage des zweiten Bandes eine Verbindungslage aus nur einer Korrosionsschutzlage des ersten, dreilagigen Korrosionsschutzbandes.

Ein alternatives, viertes Beispiel einer Herstellung eines Korrosionsschutzbandes umfasst die zur Verfügung Stellung eines ersten, dreilagigen Korrosionsschutzbandes und eines zweiten, dreilagigen Korrosionsschutzbandes. Das erste, dreilagige Korrosionsschutzband war mit einer dreischichtigen Trägerlage ausgebildet, wobei die Trägerlage eine Tragschicht mit auf beiden Oberflächen derselben aufgetragenen Haftvermittlungsschicht ausgebildet war. Die Haftvermittlungsschichten bestanden aus 50 Gew.-% eines zumindest teilweise vorvernetzten Butylkautschuks mit den in der obigen Beschreibung angegebenen Eigenschaften, 33,33 Gew.-% eines thermoplastischen Elastomers TPS-SEBS, und 16,67 Gew.-% eines Ethylen-Propylen-Dien-Kautschuks mit 5-Ethyliden-2-Norbornen als Dien, wobei die Mengen bezogen sind auf die Gesamtmenge der Haftvermittlungsschicht, und die Bestandteile Eigenschaften aufweisen, wie diese in der obigen Beschreibung angegeben sind. Die Tragschicht bestand aus einem thermoplastischen Elastomer, nämlich TPS-SEBS. In einem Koextrusionsverfahren wurde die Trägerlage mit einer Tragschicht und auf den beiden Oberflächen der Tragschicht angeordnete Haftvermittlungsschichten hergestellt. Die Tragschicht wies eine Stärke von 0,5 mm auf, die Haftvermittlungsschichten jeweils eine Stärke von 40 $\mu$m.

Das erste dreilagige Korrosionsschutzband wies zwei Korrosionsschutzlagen auf, d jeweils auf einer Oberfläche der Trägerlage derart angeordnet waren, dass die Trägerlage zwischen den zwei Korrosionsschutzlagen angeordnet war. Die zwei Korrosionsschutzlagen bestanden aus 30 Gew.-% eines Polyisobutylens, 10 Gew.-% eines Butylkautschuks, 60 Gew.-% eines pulverförmigen, mineralischen Füllmateriales, jeweils bezogen auf die Gesamtmenge einer Korrosionsschutzlage. Die Bestandeile der Korrosionsschutzlage weisen Eigenschaften auf, wie diese in der obigen Beschreibung angegeben sind. Eine der zwei Korrosionsschutzlagen umfasste weiterhin eine flächige, kreisrund perforierte metallisierte Rettungsfolie, die in einer der zwei Korrosionsschutzlagen eingebettet wurde. Alternativ wurde die metallisierte Rettungsfolie in einem Kalanderprozess getrennt eingeführt wie nachstehend beschrieben.

Das zweite dreilagige Korrosionsschutzband war mit einer dreischichtigen Trägerlage ausgebildet, wobei die Trägerlage eine Tragschicht mit auf beiden Oberflächen derselben aufgetragenen Haftvermittlungsschicht ausgebildet war. Die Haftvermittlungsschichten bestanden aus 50 Gew.-% eines zumindest teilweise vorvernetzten Butylkautschuks mit den in der obigen Beschreibung angegebenen Eigenschaften, 33,33 Gew.-% eines elektronenstrahlvernetzbaren Polypropylen und 16,67 Gew.-% eines Ethylen-Propylen-Dien-Kautschuks mit 5-Ethyliden-2-Norbornen als Dien, wobei die Mengen bezogen sind auf die Gesamtmenge der Haftvermittlungsschicht, und die Bestandteile Eigenschaften aufweisen, wie diese in der obigen Beschreibung angegeben sind. Die Tragschicht bestand aus einem Vlies aus Polypropylen. Die Tragschicht wies eine Stärke von 0,4 mm auf, die Haftvermittlungsschichten jeweils eine Stärke von 40 $\mu$m.

Das zweite dreilagige Korrosionsschutzband wies zwei Korrosionsschutzlagen auf, die jeweils auf einer Oberfläche der Trägerlage derart angeordnet, dass die Trägerlage zwischen den zwei Korrosionsschutzlagen angeordnet war. Die zwei Korrosionsschutzlagen bestanden aus 30 Gew.-% eines Polyisobutylens, 10 Gew.-% eines Butylkautschuks, 60 Gew.-% eines pulverförmigen, mineralischen Füllmateriales, jeweils bezogen auf die Gesamtmenge der Korrosionsschutzlage. Die Bestandeile der Korrosionsschutzlage weisen Eigenschaften auf, wie diese in der obigen Beschreibung angegeben sind. Eine der zwei Korrosionsschutzlagen umfasste weiterhin eine flächige, kreisrund perforierte metallisierte Rettungsfolie, die in einer der zwei Korrosionsschutzlagen eingebettet wurde.

Das erste dreilagige und das zweite dreilagige Band wurden in einem Kalanderprozess mit einer gummibeschichteten Arbeitswalze und einer Gegenwalze aus Stahl verpresst. Der Walzspalt war dabei auf 1,0 mm eingestellt. Die zwei in den Walzspalt einlaufenden Korrosionsschutzbänder wurden zum Verpressen derart aufeinander gelegt, dass die Korrosionsschutzlage des ersten dreilagigen Korrosionsschutzbandes mit der in dieser eingebetteten perforierten metallisierten Rettungsfolie in Kontakt mit einer der zwei Korrosionsschutzlagen des zweiten Korrosionsschutzbandes kam. In der alternativen Ausgestaltung wurde bei Einlaufen in den Walzspalt zwischen die beiden Korrosionsschutzlagen des ersten und des zweiten Korrosionsschutzbandes getrennt die metallisierte perforierte Rettungsfolie eingeführt. Das verpresste auslaufende fünfschichtige Korrosionsschutzband bildete zwischen der Trägerlage des ersten Bandes und der Trägerlage des zweiten Bandes eine aufgrund der metallisierten perforierten Rettungsfolie elektrisch leitfähige Verbindungslage aus, gebildet aus jeweils einer Korrosionsschutzlage des ersten und des zweiten Korrosionsschutzbandes.

## Patentansprüche

1. Korrosionsschutzband umfassend mindestens vier Lagen, wobei mindestens zwei Lagen des Korrosionsschutzbandes als Trägerlagen einen mindestens einschichtigen Träger umfassen, wobei mindestens eine Schicht des Trägers als Tragschicht ausgebildet ist, wobei mindestens eine weitere Lage des Korrosionsschutzbandes als Verbindungslage ausgebildet ist und mindestens eine Verbindungsschicht umfasst, wobei die Verbindungsschicht ein Material umfassend mindestens einen Butylkautschuk und/oder mindestens ein Polyisobutylen aufweist, wobei die mindestens eine Verbindungslage zwischen den zwei Trägerlagen angeordnet ist, und wobei mindestens eine weitere Lage des Korrosionsschutzbandes als Korrosionsschutzlage ausgebildet ist und auf mindestens einer freiliegenden Oberfläche mindestens einer Trägerlage angeordnet ist, wobei auf mindestens einer Oberfläche der Tragschicht mindestens einer der Trägerlagen eine Haftvermittlungsschicht angeordnet ist, wobei die Tragschichten der mindestens zwei Trägerlagen aus einem Trägermaterial gebildet sind umfassend mindestens ein Polyethylen, ein Polypropylen, ein Polyvinylchlorid, ein thermoplastisches Elastomer und/oder ein Metall.

2. Korrosionsschutzband gemäß Anspruch 1, **dadurch gekennzeichnet, dass** die Tragschicht mindestens einer der Trägerlagen als Folie, Vlies, Gewebe, Netz, Gelege, Gewirke, perforierte Folie oder Gitter ausgebildet ist.

3. Korrosionsschutzband gemäß einem oder mehreren der vorhergehenden Ansprüche, **dadurch gekennzeichnet, dass** die Haftvermittlungsschicht eine Haftvermittlungszusammensetzung aufweist, umfassend 20 Gew.-% bis 70 Gew.-% mindestens eines Polymers ausgewählt aus einer Gruppe umfassend Polyethylene, Polypropylene, Polyvinylchlorids und/oder thermoplastische Elastomere; und 20 Gew.-% bis 65 Gew.-% mindestens eines Butylkautschuks; wobei die Angaben in Gewichtsprozent jeweils bezogen sind auf die Gesamtmenge der Haftvermittlungsschicht, und einen Toleranzbereich von ±20% umfassen.

4. Korrosionsschutzband gemäß einem oder mehreren der vorhergehenden Ansprüche, **dadurch gekennzeichnet, dass** die Tragschicht und die mindestens eine Haftvermittlungsschicht koextrudiert sind.

5. Korrosionsschutzband gemäß einem oder mehreren der vorhergehenden Ansprüche, **dadurch gekennzeichnet, dass** in der mindestens einen Verbindungslage und/oder in der mindestens einen Korrosionsschutzlage und/oder in mindestens einer der mindestens zwei Trägerlagen mindestens ein elektrisch leitfähiges Material und/oder mindestens ein Kernmaterial angeordnet ist, wobei das Kernmaterial eine Vorrichtung umfassend Sender-Empfänger-Systeme, Sensoren, Detektoren, Aufnehmer und/oder Fühler ist.

6. Verfahren zur Aufbringung eines Korrosionsschutzbandes gemäß einem oder mehreren der Ansprüche 1 bis 5 als Korrosionsschutz auf Rohren, Pipelines, rohrförmigen Gegenständen, Rohrleitungen und Rohrleitungsbauteilen, auf Tanks und Bestandteilen von Tanks sowie bei sonstigen Anlagen und Einbauten durch Aufbringung des Korrosionsschutzbandes auf diese.

7. Verfahren gemäß Anspruch 6, **dadurch gekennzeichnet, dass** Rohre, Pipelines, rohrförmige Gegenstände, Rohrleitungen und Rohrleitungsbauteile sowie Tanks und Bestandteilen von Tanks mit dem Korrosionsschutzband umwickelt werden.

8. Verfahren zur Herstellung eines Korrosionsschutzbandes gemäß einem oder mehreren der Ansprüche 1 bis 5 mittels Ausüben von Druck auf mindestens ein erstes, mindestens zweilagiges Korrosionsschutzband und auf mindestens ein zweites, mindestens zweilagiges Korrosionsschutzband, wobei das erste und das zweite Korrosionsschutzband mindestens eine Trägerlage und mindestens eine Korrosionsschutzlage umfassen, derart, dass das erste oder das zweite Korrosionsschutzband mit dem jeweils anderen Korrosionsschutzband in Kontakt gebracht wird, so dass mindestens eine Korrosionsschutzlage des ersten oder des zweiten Korrosionsschutzbandes eine Verbindungslage, angeordnet zwischen den Trägerlagen des mindestens einen ersten und zweiten Korrosionsschutzbandes, und die mindestens eine weitere Korrosionsschutzlage des ersten oder zweiten Korrosionsschutzbandes eine äußere Lage des Korrosionsschutzbandes ausbildet.

9. Verfahren gemäß Anspruch 8, **dadurch gekennzeichnet, dass** das mindestens eine erste, mindestens zweilagige Korrosionsschutzband und das mindestens eine zweite, mindestens zweilagige Korrosionsschutzband durch ein Pressverfahren zusammen gepresst werden.

10. Verfahren gemäß einem oder mehreren der Ansprüche 8 bis 9, **dadurch gekennzeichnet, dass** ein erstes, zweilagiges Korrosionsschutzbandes und ein zweites, dreilagiges Korrosionsschutzband, wobei das erste Korrosionsschutzband eine Trägerlage und eine Korrosionsschutzlage umfasst und das zweite Korrosionsschutzband eine Trägerlage und zwei Korrosionsschutzlagen umfasst wobei die Trägerlage des zweiten Korrosionsschutzbandes zwischen den zwei Korrosionsschutzlagen desselben angeordnet ist, in Kontakt miteinander gebracht werden derart, dass die Korrosionsschutzlage des ersten Korrosionsschutzbandes einer der zwei Korrosionsschutzlagen des zweiten Korrosionsschutzbandes zugeordnet wird derart, dass diese eine Verbindungslage, angeordnet zwischen den Trägerlagen des ersten und zweiten Korrosionsschutzbandes, nach Ausüben eines Druckes auf das erste und das zweite Korrosionsschutzband ausbilden.

11. Verfahren gemäß einem oder mehrerer der Ansprüche 8 bis 10, **dadurch gekennzeichnet, dass** die Trägerlage des mindestens einen ersten und/oder des mindestens einen zweiten Korrosionsschutzbandes aus einem mindestens einschichtigen Träger gebildet wird, wobei mindestens eine Schicht des Trägers als Tragschicht ausgebildet wird, wobei die Tragschicht aus mindestens einem Trägermaterial gebildet wird umfassend Polyethylen, Polypropylen, Polyvinylchlorid, thermoplastische Elastomere und/oder Metalle, und wobei die mindestens eine Korrosionsschutzlage des mindestens einen ersten und/oder des mindestens einen zweiten Korrosionsschutzbandes ein Material umfassend mindestens einen Butylkautschuk und/oder mindestens ein Polyisobutylen aufweist.

12. Verwendung eines Korrosionsschutzbandes gemäß einem oder mehreren der vorhergehenden Ansprüche 1 bis 5 für den Schutz von Rohren, Pipelines, rohrförmigen Gegenständen, Rohrleitungen und Rohrleitungsbauteilen sowie von Tanks und Bestandteilen von Tanks, sowie sonstigen Anlagen und Einbauten vor Korrosion.

13. Verwendung eines Korrosionsschutzbandes gemäß einem oder mehreren der Ansprüche 1 bis 5 zur Lokalisierung mindestens eines Defektes in einer Rohrleitung oder Pipeline im Bereich einer Schweißnaht, wobei die Verbindungslage mindestens ein in der mindestens einen Verbindungslage eingebettetes leitfähiges Material und/oder Kernmaterial umfasst, das zumindest im Bereich einer Schweißnaht einer Rohrleitung oder Pipeline anordenbar ist, wobei das Kernmaterial eine Vorrichtung umfassend Sender-Empfänger-Systeme, Sensoren, Detektoren, Aufnehmer und/oder Fühler ist.

## Claims

1. Anti-corrosion tape comprising at least four plies, wherein at least two plies of the anti-corrosion tape comprise as carrier plies a carrier that has at least one layer, wherein at least one layer of the carrier is configured as a carrying layer, wherein at least one further ply of the anti-corrosion tape is configured as a connecting ply and comprises at least one connecting layer, wherein the connecting layer comprises a material that comprises at least one butyl rubber and/or at least one polyisobutylene, wherein the at least one connecting ply is disposed between the two carrier plies, and wherein at least one further ply of the anti-corrosion tape is configured as an anti-corrosion ply and is disposed on at least one exposed surface of at least one carrier ply, wherein an adhesion-promoting layer is disposed on at least one surface of the carrying layer of at least one of the carrier plies, wherein the carrying layers of the at least two carrier plies are formed from a carrier material that comprises at least one polyethylene, one polypropylene, one polyvinyl chloride, one thermoplastic elastomer and/or one metal.

2. Anti-corrosion tape according to claim 1, **characterized in that** the carrying layer of at least one of the carrier plies is configured as a film, a non-woven fabric, a woven fabric, a net, a non-crimp fabric, a knitted fabric, a perforated film or a mesh.

3. Anti-corrosion tape according to one or more of the preceding claims, **characterized in that** the adhesion-promoting layer comprises an adhesion-promoting composition comprising

> 20 % by weight to 70 % by weight of at least one polymer that is selected from a group that comprises polyethylenes, polypropylenes, polyvinyl chlorides and / or thermoplastic elastomers; and 20 % by weight to 65 % by weight of at least one butyl rubber;
> wherein the values in percent by weight are in each case in relation to the total amount of the adhesion-promoting layer, and comprise a tolerance range of ±20 %.

4. Anti-corrosion tape according to one or more of the preceding claims, **characterized in that** the carrying layer and the at least one adhesion-promoting layer are coextruded.

5. Anti-corrosion tape according to one or more of the preceding claims, **characterized in that** at least one electrically conductive material and/or at least one core material is disposed in the at least one connecting ply and/or in the at least one anti-corrosion ply and/or in at least one of the at least two carrier plies, wherein the core material is a device that comprises transmitter-receiver systems, sensors, detectors, measuring devices and/or sensing devices.

6. Method for the application of an anti-corrosion tape that is in accordance with one or more of claims 1 to 5 as corrosion protection to pipes, pipelines, tubular objects, piping conduits and piping conduit components, to tanks and components of tanks and to other installations and fixtures by applying the anti-corrosion tape thereto.

7. Method according to claim 6, **characterized in that** pipes, pipelines, tubular objects, piping conduits and piping conduit components as well as tanks and components of tanks are being wrapped with the anti-corrosion tape.

8. Method for the manufacturing of an anti-corrosion tape that is in accordance with one or more of the claims 1 to 5 by means of applying pressure to at least one first anti-corrosion tape that has at least two plies and to at least one second anti-corrosion tape that has at least two plies, wherein the first and the second anti-corrosion tape comprise at least one carrier ply and at least one anti-corrosion ply, in such a way that the first or the second anti-corrosion tape is brought into contact with the respective other anti-corrosion tape, so that at least one anti-corrosion ply of the first or of the second anti-corrosion tape forms a connecting ply that is disposed between the carrier plies of the at least one first and second anti-corrosion tape, and the at least one further anti-corrosion ply of the first or second anti-corrosion tape forms an outer ply of the anti-corrosion tape.

9. Method according to claim 8, **characterized in that** the at least one first anti-corrosion tape that has at least two plies and the at least one second anti-corrosion tape that has at least two plies are pressed together by means of a pressing process.

10. Method according to one or more of claims 8 to 9, **characterized in that** a first anti-corrosion tape that has two layers and a second anti-corrosion tape that has three layers, wherein the first anti-corrosion tape comprises a carrier ply and an anti-corrosion ply and the second anti-corrosion tape comprises a carrier ply and two anti-corrosion plies, wherein the carrier ply of the second anti-corrosion tape is disposed between the two anti-corrosion plies of the same, are brought into contact with each other in such a way that the anti-corrosion ply of the first anti-corrosion tape is associated with one of the two anti-corrosion plies of the second anti-corrosion tape in such a way that they form a connecting ply that is disposed between the carrier plies of the first and second anti-corrosion tapes after applying a pressure to the first and second anti-corrosion tapes.

11. Method according to one or more of claims 8 to 10, **characterized in that** the carrier ply of the at least one first and/or of the at least one second anti-corrosion tape is being formed from a carrier that has at least one layer, wherein at least one layer of the carrier is configured as a carrying layer, wherein the carrying layer is formed from at least one carrier material that comprises polyethylene, polypropylene, polyvinyl chloride, thermoplastic elastomers and/or metals, and wherein the at least one anti-corrosion ply of the at least one first and / or of the at least one second anti-corrosion tape comprises a material that comprises at least one butyl rubber and/or at least one polyisobutylene.

**12.** Use of an anti-corrosion tape that is in accordance with one or more of the preceding claims 1 to 5 for the protection against corrosion of pipes, pipelines, tubular objects, piping conduits and piping conduit components as well as of tanks and components of tanks, and of other installations and fixtures.

**13.** Use of an anti-corrosion tape that is in accordance with one or more of the claims 1 to 5 for the localization of at least one defect in a piping conduit or pipeline in the region of a weld seam, wherein the connecting ply comprises at least one conductive material and/or core material that is embedded in the at least one connecting ply and that can be arranged at least in the region of a weld seam of a piping conduit or pipeline, wherein the core material is a device that comprises transmitter-receiver systems, sensors, detectors, measuring devices and/or sensing devices.

**Revendications**

**1.** Bande de protection contre la corrosion comprenant au moins quatre plis, au moins deux plis de la bande de protection contre la corrosion comprenant comme plis de support un support au moins monocouche, au moins une couche du support étant formé comme couche de support, au moins un autre pli de la bande de protection contre la corrosion étant formé comme pli de liaison et comprenant au moins une couche de liaison, la couche de liaison comprenant un matériau comprenant au moins un caoutchouc butyle et/ou au moins un polyisobutylène, l'au moins un pli de liaison étant disposé entre les deux plis de support, et au moins un autre pli de la bande de protection contre la corrosion étant formé comme un pli de protection contre la corrosion et étant disposé sur au moins une surface exposée d'au moins un pli de support, une couche d'adhérence étant disposée sur au moins une surface de la couche de support d'au moins un des plis de support, les couches de support des au moins deux plis de support étant formées d'un matériau de support comprenant au moins un polyéthylène, un polypropylène, un chlorure de polyvinyle, un élastomère thermoplastique et/ou un métal.

**2.** Bande de protection contre la corrosion selon la revendication 1, **caractérisée en ce que** la couche de support d'au moins l'un des plis de support est formée sous la forme d'une feuille, d'un non-tissé, d'un tissu, d'un filet, d'un tissage, d'un tricot, d'une feuille perforée ou d'une grille.

**3.** Bande de protection contre la corrosion selon l'une ou plusieurs des revendications précédentes, **caractérisée en ce que** la couche d'adhérence a une composition d'adhérence comprenant

20 % à 70 % en poids d'au moins un polymère choisi dans un groupe comprenant des polyéthylènes, polypropylènes, polychlorures de vinyle et/ou élastomères thermoplastiques ; et 20 % en poids à 65 % en poids d'au moins un caoutchouc butyle ; les données en pourcentage en poids se rapportant à chaque fois à la quantité totale de la couche d'adhérence, et comprenant une plage de tolérance de ±20%.

**4.** Bande de protection contre la corrosion selon l'une ou plusieurs des revendications précédentes, **caractérisée en ce que** la couche de support et la au moins une couche d'adhérence sont coextrudées.

**5.** Bande de protection contre la corrosion selon une ou plusieurs des revendications précédentes, **caractérisée en ce que** au moins un matériau électriquement conducteur et/ou au moins un matériau de noyau est disposé dans l'au moins un pli de liaison et/ou dans l'au moins un pli de protection contre la corrosion et/ou dans au moins un des au moins deux plis de support, le matériau de noyau étant un dispositif comprenant des systèmes d'émetteur-récepteur, des capteurs, des détecteurs, des enregistreurs et/ou des sondes.

**6.** Procédé d'application d'une bande de protection contre la corrosion selon l'une ou plusieurs des revendications 1 à 5, en tant que protection contre la corrosion sur des tuyaux, des pipelines, des objets de forme tubulaire, des tuyauteries et des composants de tuyauterie, sur des réservoirs et des composants de réservoirs, ainsi que sur d'autres installations et éléments intégrés, par application de la bande de protection contre la corrosion sur ceux-ci.

**7.** Procédé selon la revendication 6, **caractérisé en ce que** des tuyaux, des pipelines, des objets en forme de tubulaire, des tuyauteries et des composants de tuyauterie ainsi que des réservoirs et des composants de réservoirs sont enveloppés avec la bande de protection contre la corrosion.

**8.** Procédé de fabrication d'un bande de protection contre la corrosion selon l'une ou plusieurs des revendications 1 à 5, par application d'une pression sur au moins une première bande de protection contre la corrosion au moins à deux plis, et sur au moins une deuxième bande de protection contre la corrosion au moins à deux plis, les première et deuxième bande de protection contre la corrosion comprenant au moins un pli de support et au moins un pli de protection contre corrosion, de manière à ce que la première ou la deuxième bande de protection contre la corrosion est mise en contact avec l'autre bande de protection contre la corrosion respective, de sorte qu'au moins un pli de protection contre la corrosion de la première ou de la deuxième bande de protection contre la corrosion forme un pli de liaison, disposé entre les plis de support de la au moins une première et une deuxième bande de protection contre la corrosion, et l'au moins un autre pli de protection contre la corrosion de la première ou deuxième bande de protection contre la corrosion formant un pli extérieur de la bande de protection contre la corrosion.

9. Procédé selon la revendication 8, **caractérisé en ce que** la au moins une première bande de protection contre la corrosion à au moins deux plis et la au moins une deuxième bande de protection contre la corrosion à au moins deux plis sont pressées ensemble par un procédé de pressage.

10. Procédé selon l'une ou plusieurs des revendications 8 à 9, caractérisé en ce une première bande de protection contre la corrosion à deux plis comprenant un pli support et un pli de protection contre la corrosion et une deuxième bande de protection contre la corrosion à trois plis comprenant un pli de support et deux plis de protection contre la corrosion, le pli de support de la deuxième bande de protection contre la corrosion étant disposée entre les deux plis de protection contre la corrosion de celle-ci, sont mises en contact l'une avec l'autre de telle manière que le pli de protection contre la corrosion de la première bande de protection contre la corrosion est associée à l'un des deux plis de protection contre la corrosion de la deuxième bande de protection contre la corrosion de telle manière qu'elles forment un pli de liaison disposée entre les plis de support de la première et de la deuxième bande de protection contre la corrosion après l'application d'une pression sur la première et la deuxième bande de protection contre la corrosion.

11. Procédé selon une ou plusieurs des revendications 8 à 10, **caractérisé en ce que** le pli de support d'au moins une première et/ou d'au moins une deuxième bande de protection contre la corrosion est formée d'un support au moins monocouche, au moins une couche du support étant formée comme une couche de support, la couche de support étant formée d'au moins un matériau de support comprenant un polyéthylène, un polypropylène, un chlorure de polyvinyle, des élastomères thermoplastiques et/ou des métaux, et l'au moins un pli de protection contre la corrosion de l'au moins une première et/ou de l'au moins une deuxième bande de protection contre la corrosion comprenant un matériau comprenant au moins un caoutchouc butyle et/ou au moins un polyisobutylène.

12. Utilisation d'une bande de protection contre la corrosion selon une ou plusieurs des revendications 1 à 5 ci-dessus pour la protection contre la corrosion de tuyaux, de pipelines, d'objets de forme tubulaire, de tuyauteries et de composants de tuyauterie, ainsi que de réservoirs et de composants de réservoirs, et d'autres installations et éléments intégrés.

13. Utilisation d'une bande de protection contre la corrosion selon une ou plusieurs des revendications 1 à 5 pour la localisation d'au moins un défaut dans une tuyauterie ou un pipeline dans la zone d'une soudure, le pli de liaison comprenant au moins un matériau conducteur et/ou un matériau de noyau encastré dans l'au moins un pli de liaison, qui peut être disposé au moins dans la zone d'une soudure d'une tuyauterie ou d'un pipeline, le matériau de noyau étant un dispositif comprenant des systèmes d'émetteur-récepteur, des capteurs, des détecteurs, des enregistreurs et/ou des sondes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0421607 A1
- EP 3412720 A1
- US 2019249039 A1
- US 2018305556 A1
- WO 2020229600 A1
- CN 207349693 U
- CN 101935500 A